# EUROPÄISCHE PATENTSCHRIFT

(11) **EP 0 756 720 B1**
(45) Veröffentlichungstag und Bekanntmachung des Hinweises auf die Patenterteilung: **05.11.1997**
(21) Anmeldenummer: 95915757.9
(22) Anmeldetag: 08.04.1995
(51) Int. Cl.: G03B 21/10

(54) **RÜCKPROJEKTIONSMODUL**
REAR PROJECTION MODULE
MODULE DE RETROPROJECTION

(30) Priorität: 18.04.1994 DE 4413024
(43) Veröffentlichungstag der Anmeldung: 05.02.1997
(73) Patentinhaber: Seufert, Heinz, Dr., 76227 Karlsruhe (DE)
(72) Erfinder: Seufert, Heinz, Dr., 76227 Karlsruhe (DE)
(74) Vertreter: Jany, Peter
(86) Internationale Anmeldenummer: DE9500479
(87) Internationale Veröffentlichungsnummer: WO9528664

(56) Entgegenhaltungen:
- DE-A- 4 128 059
- US-A- 5 011 277
- US-A- 5 116 117
- US-A- 5 296 882
- PATENT ABSTRACTS OF JAPAN vol. 16, no. 415 (E-1257) 2. September 1992; & JP-A-04 139 975

## Beschreibung

Die Erfindung betrifft ein Rückprojektionsmodul zum Anzeigen eines Bildes auf einem großflächigen Projektionsschirm, umfassend einen Durchlicht-Bildgeber zum Darstellen des Bildes in einem verkleinerten Maßstab, eine Beleuchtungseinrichtung zum Durchleuchten des Durchlicht-Bildgebers und eine Projektionseinrichtung zum vergrößerten Abbilden des von dem Durchlicht-Bildgeber dargestellten Bildes auf den Projektionsschirm.

Solche Rückprojektionsmodule finden eine weite Anwendung in Fällen, in denen ein großes Bild angezeigt werden soll. Die Bildvorlagen in dem Bildgeber können Videobilder, Computerbilder oder sonstiger Art sein. Unter einem großen Bild werden dabei Bilder verstanden, die typischerweise Bildschirmdiagonalen von mehr als 0,5 m aufweisen. Verbreitete Einsatzbereiche für solche Rückprojektionsmodule sind Datensichtgeräte, die von mehreren Personen gleichzeitig betrachtet werden sollen, wie dies bei Konferenzen oder Präsentationen der Fall ist. Insbesondere in der modernen Leitwarttechnik ist die Großbildrückprojektion verbreitet.

Der Durchlicht-Bildgeber ist typischerweise eine Durchlicht-Flüssigkristall-Anzeigevorrichtung. Sie kann als schwarz/weiß oder bevorzugt als farbige Flüssigkristallanzeige ausgebildet sein. Nach dem gegenwärtigen Stand der Technik auf dem Gebiet der Flüssigkristall-Anzeigevorrichtungen gibt es zwei Klassen, die sich in der Größe unterscheiden. Die kleineren, zum Beispiel aus Polysilizium gefertigten Flüssigkristall-Anzeigevorrichtungen mit Größen der Bilddiagonale um 2 Zoll weisen den Nachteil auf, daß die sogenannte Pixelapertur relativ klein ist. Die Pixelapertur ist ein Maß dafür, mit welchem Flächenanteil die Flüssigkristall-Anzeigevorrichtung lichtdurchlässig ist. In Verbindung mit der hohen geforderten Beleuchtungsstärke zur Erzielung eines hellen projizierten Bildes führt dies zu schwer beherrschbaren Wärmeabfuhrproblemen und nachteilig hohen Oberflächentemperaturen.

Diese Nachteile werden vermieden, wenn großflächigere Flüssigkristall-Anzeigevorrichtungen mit Diagonalen von 6 bis 20 Zoll, die nach dem derzeitigen Stand der Technik aus amorphem Silizium gefertigt werden, verwendet werden. Bei ihnen ist die Pixelapertur größer. Zudem ist die Oberflächentemperatur auch durch die reduzierte Beleuchtungsstärke vermindert, so daß sich auch bei hohen Lichtströmen lange Standzeiten ergeben. Im Rahmen der Erfindung sind nach der derzeitigen Technologie Flüssigkristall-Anzeigevorrichtungen mit Diagonalen um 10 Zoll bevorzugt. Bei optischen Abbildungen nehmen allgemein mit der Größe des Bildes auch die technischen Schwierigkeiten zur Realisierung einer einwandfreien Abbildung zu. Es ist daher erstaunlich, daß die in dem erfindungsgemäßen Anwendungsbereich hohen Qualitätsanforderungen bei solchen Bildgebergrößen erfüllt werden können.

Eine bekannte Beleuchtungseinrichtung besteht aus einer Lampe, einem Reflektor und einem Kondensor. Bevorzugt werden Metall-Halogen-Kurzbogenlampen verwendet.

Zu der Projektionseinrichtung zum vergrößerten Abbilden des von einem Durchlicht-Bildgeber dargestellten Bildes auf einen Projektionsschirm gehört stets ein Projektionsobjektiv. Gelegentlich wird auch der Bildgeber der Projektionseinrichtung zugerechnet.

Bekannte Projektionsschirme für Rückprojektionsmodule weisen eine Lentikularscheibe und eine Trägerscheibe auf, die jeweils eine der Projektionseinrichtung zugewandte lichteintrittsseitige Fläche, eine dieser gegenüberliegende lichtaustrittsseitige Fläche und eine die Eintritts- mit der Austrittsfläche verbindende Umfassungsfläche haben. Zwischen der Eintrittsfläche und der Austrittsfläche des Projektionsschirms ist eine Fresnelstruktur angeordnet. Die Fresnelstruktur kann beispielsweise auf der lichteintrittsseitigen Fläche der Lentikularscheibe, der lichtaustrittsseitigen Fläche der Trägerscheibe oder auf einer gesonderten Fresnelscheibe ausgebildet sein. Der Aufbau des Projektionsschirms aus zwei oder drei Scheiben ist durch statische und optische Gründe bedingt. Die Trägerscheibe dient dazu, den Projektionsschirm insgesamt mechanisch zu haltern.

Die Fresnelstruktur bricht das einfallende Licht für die Beleuchtung der nachfolgenden Lentikularscheibe. Dadurch wird erreicht, daß das Bild unter jedem Blickwinkel annähernd gleichmäßig hell erscheint; die Bildhelligkeit bleibt jedoch blickwinkelabhängig. Die Fresnelstruktur einer Fresnelscheibe ist zumeist zu der Lentikularscheibe hin orientiert, um keinen allzu großen Lichtrandabfall zu haben.

Eine Lentikularscheibe ist eine Scheibe, die auf der Lichteintrittsseite ebenflächig und auf der Austrittsseite in bestimmter Weise profiliert ausgebildet ist. Im Innern der Lentikularscheibe sind in der Bildebene kleine Streukörper angeordnet, die eine geringe, zunächst rotationssymmetrische Aufweitung des vom Objekt einfallenden Lichtes bewirken. Die Profilierung weitet das Licht nur in der bevorzugten horizontalen Richtung stark auf. Damit wird die Bildbetrachtung unter großen horizontalen Blickwinkeln ermöglicht. Die vertikalen Betrachtungswinkel sind in der Regel nur in einem kleinen Bereich zu variieren (z.B. sitzender und stehender Betrachter). Insgesamt wird ein für die bevorzugten Betrachtungswinkel im Vergleich zur reinen Streuscheibe deutlich helleres Bild erzeugt. Die profilierte Oberfläche der Lentikularscheibe weist meist eine Black-Matrix auf, bei der es sich um eine Teilbeschichtung handelt, durch die Reflexionen von aus der Umgebung stammendem Streulicht unterdrückt werden.

Wenn das angezeigte Bild bei gegebenen Qualitätsanforderungen eine bestimmte Größe überschreiten soll, ist dies nicht mehr mit einem einzigen Rückprojektionsmodul möglich. Der Grund liegt darin, daß die Projektionsscheibe, insbesondere die Fresnelscheibe bzw. -struktur, nicht in beliebiger Größe herstellbar ist. Ferner wäre auch die Auflösung unzureichend, da die Zahl der Bildpunkte des Durchlicht-Bildgebers begrenzt ist. In solchen Fällen ist es daher erforderlich, das Bild aus Teilbildern, die jeweils von einem Rückprojektionsmodul angezeigt werden, zusammenzusetzen. Das jeweils von einem Rückprojektionsmodul angezeigte Bild wird in diesem Fall zu einem Teilbild des von allen Rückprojektionsmodulen zusammen angezeigten Gesamtbildes.

Dabei stellt sich das Problem, die von den einzelnen Rückprojektionsmodulen angezeigten Teilbilder derart zu einem Großbild zusammenzusetzen, daß ein schachbrettartiger Charakter des Gesamtbildes vermieden wird. Insbesondere ist ein breiter, deutlich sichtbarer Steg zwischen den einzelnen Teilbildern zu vermeiden. Hierzu ist es erforderlich, die großen und schweren Projektionsschirme nahezu nahtlos zu einer Bildwand aneinanderzureihen, ohne daß mechanische Halterungselemente den gegenseitigen Abstand begrenzen. Gleichzeitig muß gewährleistet sein, daß das von einem Rückprojektionsmodul angezeigte Bild bis dicht an den Rand und die Ecken des Projektionsschirms reicht, damit sich kein dunkel erscheinender Bereich ergibt.

Zur Lösung dieses Problems gibt es im Stand der Technik keine zufriedenstellende Lösung. In dem Dokument DE 4031053 A1 ist eine Großbildwand beschrieben, bei der sich die projizierten Teilbilder in den Randbereichen teilweise überlappen. Dabei sollen die von zwei benachbarten Projektoren projizierten, sich überlappenden Teilbereiche durch streifenförmige Blenden soweit abgedunkelt werden, daß die Helligkeit der Überlappungsbereiche der Helligkeit der übrigen Bildbereiche entspricht. Das Großbild wird auf einer Großbildwand angezeigt, die aus einer einzigen großen Projektionsscheibe gebildet oder aus einzelnen Teilbildwänden zusammengesetzt sein kann. Diese Anordnung erfüllt weder in optischer noch in statischer Hinsicht die gestellten Anforderungen.

Aus dem Dokument US-PS 5,011,277 ist eine Matrix-Anordnung von Projektionsschirmen bekannt, die mittels einer Federaufhängung aneinandergereiht sind. Diese Befestigung mit Federn ist einerseits konstruktiv sehr aufwendig und weist andererseits den Nachteil auf, daß die Federn bzw. die zugehörigen Befestigungselemente Abschattungen bewirken. Die im Zwischenraum zwischen den einzelnen Projektionsschirmen hindurchgreifenden Befestigungselemente erfordern zudem, daß die Projektionsschirme einen relativ großen seitlichen Abstand einhalten. Auch diese Anordnung erfüllt daher weder in optischer noch in statischer Hinsicht die gestellten Anforderungen.

Zur Lösung der Aufgabe, die eingangs genannten Rückprojektionsmodule so weiterzubilden, daß das auf dem Projektionsschirm angezeigte Bild im wesentlichen stegfrei in einer Matrixanordnung mit den Bildern weiterer Projektionsmodule aneinanderreihbar ist, wird vorgeschlagen, daß die Flächendimensionen der Lentikularscheibe und der Trägerscheibe jeweils auf der lichteintrittsseitigen Fläche umfangsverteilt kleiner als auf der lichtaustrittsseitigen Fläche sind, wobei die Flächendimensionen der lichteintrittsseitigen Fläche der Lentikularscheibe und der lichtaustrittsseitigen Fläche der Trägerscheibe denen der dazwischen angeordneten Fresnelstruktur entsprechen. Dabei ist die Trägerscheibe an ihrer Umfassungsfläche von einem Halteelement gehalten, dessen als Fixierungsteil dienender, in Ausbreitungsrichtung des projizierten Lichtes am Ende des Halteelementes gelegener Teilabschnitt die Trägerscheibe an einem Bereich ihrer Umfassungsfläche umfangsverteilt mindestens abschnittsweise umfaßt. Ferner ist ein Bereich der Umfassungsfläche der Lentikularscheibe mit einem Bereich der Umfassungsfläche der Trägerscheibe und/oder einem Bereich der Außenfläche des Fixierungsteils mittels eines umfangsverteilt zumindest abschnittsweise angeordneten Verbindungsmittels verbunden, wobei die äußeren Dimensionen des Fixierungsteils und des Verbindungsmittels die Flächendimensionen der lichtaustrittsseitigen Fläche der Lentikularscheibe um nicht mehr als den Abstand benachbarter Bildpunkte auf der Lentikularscheibe überschreiten.

Dabei können die Brechungseigenschaften der Trägerscheibe und der Fresnelstruktur, die Dicke der Trägerscheibe, die Flächendimensionen der Fresnelstruktur und das die Trägerscheibe einfassende Profil des Fixierungsteils so aufeinander abgestimmt sein, daß die von der Projektionseinrichtung abgebildeten Strahlen eines randnächsten Bildpunktes durch die Randfläche, also die äußere Begrenzungsfläche der Fresnelstruktur verlaufen und senkrecht in die Lentikularscheibe eintreten. Der Abstand des Strahls eines randnächsten Bildpunktes zu dem Rand der Fresnelstruktur sollte vorzugsweise weniger als 0,5 mm betragen. Bei einem Matrix-Durchlicht-Bildgeber und einer erfindungsgemäß zwischen diesem und dem Projektionsobjektiv angeordneten Fresnellinse gelten diese Bedingungen insbesondere für die parallel zur Flächennormalen des Matrix-Durchlicht-Bildgebers aus dem zugehörigen Bildpunkt, Pixel bzw. Subpixel austretenden Strahlen.

Die Umfassungsfläche der Trägerscheibe und das Profil des Fixierungsteils können durch die erfindungsgemäße Ausbildung so gestaltet werden, daß das Licht eines randnächsten Bildpunktes des projizierten Bildes von dem Fixierungsteil ungehindert durch die Randfläche der Fresnelstruktur treten kann. Das Fixierungsteil und die Trägerscheibe liegen vorzugsweise formschlüssig aneinander an und begrenzen die relative Bewegung senkrecht zur optischen Achse. Das Fixierungsteil ist mit der Trägerscheibe durch eine geeignete Verbindungstechnik verbunden, beispielsweise durch Kleben oder Ultraschallschweißen. Sein Profil ist so ausgebildet, daß die Innenabmessungen des Fixierungsteils in Ausbreitungsrichtung des Lichtes im wesentlichen zunehmen, also derart größer werden, daß das Licht des randnächsten Bildpunktes nicht in seiner Ausbreitung gehindert wird.

Das Fixierungsteil umfaßt die Trägerscheibe in der Regel in einem auf der Lichteintrittsseite gelegenen Bereich, da der lichtaustrittsseitige Bereich der Umfassungsfläche zur Weiterleitung der Randstrahlen in die Randfläche der Fresnelstruktur von dem Fixierungsteil freigehalten werden muß. Aus statischen Gründen ist es nicht erforderlich, daß das Fixierungsteil die Umfassungsfläche der Trägerscheibe gänzlich umfaßt; es ist ausreichend, wenn das Fixierungsteil einen Bereich der Umfassungsfläche der Trägerscheibe umfaßt, der je nach Schwere des Projektionsschirms zwischen einem Fünftel und vier Fünftel des Profils der Trägerscheibe einschließt.

Das Fixierungsteil sollte die Trägerscheibe vorzugsweise auf dem gesamten Umfang umfassen, da hierdurch die höchste mechanische Stabilität erreicht wird. In der Regel ist es aber ausreichend, wenn das Fixierungsteil die Trägerscheibe umfangsverteilt mindestens abschnittsweise umfaßt, wobei mindestens 5 %, bevorzugt mindestens 20 % des Umfangs umfaßt sein sollten.

Es ist ebenfalls nicht erforderlich, daß die gesamte Umfassungsfläche der Lentikularscheibe mit der gesamten Umfassungsfläche der Trägerscheibe mittels eines umfangsverteilt zumindest abschnittsweise angeordneten Verbindungsmittels verbunden ist. Auch hierbei ist je nach Höhe der Belastung ausreichend, wenn Bereiche, die jeweils zwischen 10 % und 90 %, bevorzugt mehr als 30 % des Profils der verbundenen Scheiben einschließen, mittels eines Verbindungsmittels verbunden sind. Das Verbindungsmittel ist ebenfalls vorzugsweise auf dem gesamten Umfang angeordnet, sollte aber mindestens 5 %, bevorzugt mindestens 20 % des Umfangs umfassen.

Die erfindungsgemäße Ausbildung des Rückprojektionsmoduls ermöglicht eine im wesentlichen stegfreie Aneinanderreihung. Der geringste Abstand von benachbarten Rückprojektionsmodulen angezeigten Bildpunkten ist dann durch den Abstand der Lentikularscheiben und den Abstand der Bildpunkte vom Rand der Lentikularscheibe gegeben. Aufgrund der thermischen Ausdehnung sollten die Lentikularscheiben nicht aneinander anliegen, sondern der dem Ausmaß einer möglichen thermischen Ausdehnung entsprechende Abstand eingehalten werden. Da sich die angezeigten Bilder aus untereinander beabstandeten Bildpunkten zusammensetzen, ist es ferner auch nicht immer erforderlich, daß die äußeren Dimensionen des Fixierungsteils und des Verbindungsmittels nicht größer als die Flächendimensionen der lichtaustrittsseitigen Fläche der Lentikularscheibe sind, auch wenn dies eine bevorzugte Ausbildung darstellt. Zur Erzielung einer im wesentlichen stegfreien Aneinanderreihung ist es ausreichend, wenn die äußeren Dimensionen des Fixierungsteils und des Verbindungsmittels die Flächendimensionen der lichtaustrittsseitigen Fläche der Lentikularscheibe um nicht mehr als den Abstand benachbarter Bildpunkte auf der Lentikularscheibe überschreiten.

Unter dem Abstand der Bildpunkte wird dabei die Schrittweite von einem Bildpunkt zum nächsten verstanden, die durch die Auflösung gegeben ist. Bei einem schwarz/weißen Bild ist der Abstand die Schrittweite von einem Pixel zum nächsten, und bei einem farbigen Bild die Schrittweite von einem farbigen Bildpunkt zum nächsten, wobei sich ein Bildpunkt auch aus mehreren Subpixeln zusammensetzen kann.

Aufgrund der Pixelstruktur der angezeigten Bilder ist es ferner nicht erforderlich, daß der randnächste Bildpunkt unmittelbar am Rand liegt. Es ist ausreichend, wenn ein solcher Bildpunkt sehr dicht am Rand liegt. Vorteilhafterweise ist der auf der Lichtaustrittsseite der Lentikularscheibe gemessene Abstand vom Rand kleiner als der der Bildpunkte untereinander, bevorzugt kleiner als die Hälfte des Bildpunktabstandes oder kleiner als die Ausdehnung eines Bildpunkts selbst, bevorzugt kleiner als die Ausdehnung eines halben Bildpunktes. In serienmäßig hergestellten erfindungsgemäßen Rückprojektionsmodulen wurde ein Abstand des randnächsten Bildpunktes vom Rand der Lichtaustrittsseite bzw. von der Umfassungsfläche der Lentikularscheibe kleiner als 0,3 mm realisiert.

Nach einem weiteren vorteilhaften Merkmal wird vorgeschlagen, daß die Flächendimensionen der lichtaustrittsseitigen Fläche der Lentikularscheibe weniger als 2 mm, bevorzugt weniger als 1 mm größer als die der lichteintrittsseitigen Fläche sind. Der seitliche Überstand der lichtaustrittsseitigen Fläche über die lichteintrittsseitige Fläche der Lentikularscheibe ist dabei jeweils die Hälfte des genannten Wertes.

Je kleiner der Unterschied in dem lichtaus- und lichteintrittsseitigen Flächendimensionen ist, desto geringer kann der Abstand des randnächsten Bildpunktes zum Rand sein. Eine praktische Untergrenze ist dadurch gegeben, daß aufgrund der Pixelstruktur der angezeigten Bilder und des wegen der thermischen Ausdehnung einzuhaltenden Abstandes ein noch weiter verringerter Randabstand keinen weiteren Gewinn bringt, und ferner dadurch, daß das Verbindungsmittel aus Festigkeitsgründen einen Mindestplatzbedarf aufweist.

Nach einem weiteren bevorzugten Merkmal wird vorgeschlagen, daß die Umfassungsfläche der Lentikularscheibe derart ausgebildet ist, daß das Licht eines randnächsten Bildpunktes der in der Lentikularscheibe gelegenen Bildebene des projizierten Bildes von dem Verbindungsmittel ungehindert durch den Rand der lichtaustrittsseitigen Fläche der Lentikularscheibe austreten kann.

Auf diese Weise wird es ermöglicht, daß das Licht eines randnächsten, von den Streukörpern in der Bildebene der Lentikularscheibe seitlich gestreuten Bildpunktes bis in den Rand der lichtaustrittsseitigen Fläche der Lentikularscheibe gelangt. Das Licht kann ohne Abschattung bis in die Kante zwischen der lichtaustrittsseitigen Fläche und der Umfassungsfläche der Lentikularscheibe gestreut werden. Somit kann das Licht den Randbereich der lichtaustrittsseitigen Fläche der Lentikularscheibe, in den aufgrund der kleineren Abmessung der Fresnelscheibe und der Abschattung durch das Verbindungsmittel kein direktes Licht gelangen kann, erreichen und dadurch den lichtaustrittsseitigen Rand der Lentikularscheibe und den Zwischenraum zwischen zwei Projektionsschirmen optisch aufhellen, wodurch das stegfreie Aussehen des Bildes weiter verbessert wird.

Eine weitere vorteilhafte Ausbildung besteht darin, daß die Umfassungsfläche der Lentikularscheibe oder der Trägerscheibe stufen- oder treppenförmig ausgebildet ist. Diese Ausbildung ist fertigungstechnisch wenig aufwendig, insbesondere wenn nur eine einzige Stufe vorgesehen ist, und ermöglicht dennoch eine ausreichende Stabilität des gesamten Projektionsschirms und seiner Halterung.

Nach einem weiteren vorteilhaften Merkmal wird vorgeschlagen, daß das die Umfassungsfläche der Trägerscheibe einfassende Fixierungsteil keilförmig ausgebildet ist. Die Umfassungsfläche der Trägerscheibe sollte natürlich korrespondierend ausgebildet sein. Der Keil kann dabei spitz oder stumpf auslaufen. Von Bedeutung ist die Erzielung eines möglichst großen Keilwinkels, so daß die Materialstärke des Fixierungsteils möglichst groß wird, um im Hinblick auf das Gewicht des Projektionsschirms, das 10 kg oder mehr betragen kann, eine ausreichende Festigkeit zu erzielen. Der maximal mögliche Keilwinkel ergibt sich durch die Anforderung, daß das Fixierungsteil den Strahl des randnächsten Bildpunktes nicht abschatten darf.

Im Rahmen der Erfindung hat sich es als vorteilhaft herausgestellt, wenn die Fresnelstruktur auf einer Fresnelscheibe ausgebildet ist, die zwischen der Trägerscheibe und der Lentikularscheibe angeordnet ist, da damit Vorteile in bezug auf die Fertigung und die optische Qualität verbunden sind. Besonders vorteilhaft ist es dabei, wenn die Fresnelstruktur auf der lichtaustrittsseitigen Fläche der Fresnelscheibe ausgebildet ist.

Eine erste vorteilhafte Ausbildung kann darin bestehen, daß die lichteintrittsseitige Fläche der Fresnelscheibe mit der lichtaustrittsseitigen Fläche der Trägerscheibe fest verbunden ist. Die Verbindung kann beispielsweise durch Kleben oder flächiges Kaschieren erfolgen. Bei dieser Ausbildung ist jedoch mit einem Auftreten von sogenannten Geisterbildern zu rechnen, die in manchen Anwendungsfällen störend sein können.

Eine zweite, vorteilhaftere Ausbildung, bei der die Geisterbilder reduziert sind, besteht darin, daß die lichteintrittsseitige Fläche der Fresnelsscheibe an der lichtaustrittsseitigen Fläche der Trägerscheibe anliegt. Die Grenzschicht der aneinander anliegenden Flächen bewirkt, daß die optischen Effekte, die zu Geisterbildung beitragen, reduziert sind.

Eine dritte, bevorzugte Ausbildung besteht darin, daß die lichteintrittsseitige Fläche der Fresnelscheibe durch einen Spalt von der lichtaustrittsseitigen Fläche der Trägerscheibe beabstandet ist. Mit einem Spalt werden die besten Ergebnisse erzielt, da die zwischen den Flächen befindliche Luft einen Mindestabstand garantiert, der nicht durch Adhäsionseffekte zunichte gemacht wird. Die Breite des Spaltes ist vorteilhafterweise kleiner als 0,5 mm, bevorzugt kleiner als 0,3 mm.

Nach einem weiteren vorteilhaften Merkmal wird vorgeschlagen, daß mindestens ein die Einhaltung eines geringen Flächenabstandes sicherndes Abstandselement zwischen der lichtaustrittsseitigen Fläche der Trägerscheibe und der lichteintrittsseitigen Fläche der Fresnelscheibe angeordnet ist.

Die Trägerscheibe besteht üblicherweise aus einem Kunststoff, beispielsweise Polymethylmethacrylat, durch den Wasserdampf diffundieren oder durch Kapillareffekte eindringen kann. Auch durch das Verbindungsmittel an der Umfassungsfläche kann Wasser eindringen. Zwischen der Trägerscheibe und der Fresnelscheibe kann sich daher im Laufe der Zeit ein Wasserfilm bilden, der zu unregelmäßigen schwarzen Flecken auf dem Projektionsschirm führt. Dies wird durch das Abstandselement vermieden, das vorteilhafterweise eine Mehrzahl an Stiften oder eine gewebe- oder gazeartige Struktur umfassen kann, durch welche die beiden Oberflächen in einem ausreichend großen Abstand gehalten werden. Praktische Werte für diesen Abstand liegen im Bereich von 0,05 bis 0,5 mm. Zwischen der Fresnelscheibe und der Lentikularscheibe besteht aufgrund der Fresnelstruktur der Fresnelscheibe dieses Problem nicht.

Vorteilhaft ist es, wenn die Fresnelscheibe eine Fresnelfolie mit einer Dicke von weniger als 1,0 mm, bevorzugt weniger als 0,5 mm, besonders bevorzugt weniger als 0,3 mm ist, um durch Mehrfachreflexionen in der Fresnelscheibe entstehende "Geisterbilder" zu vermeiden.

Nach einem anderen vorteilhaften Merkmal wird vorgeschlagen, daß die Lentikularscheibe auf der lichteintrittsund der lichtaustrittsseitigen Fläche flächig kaschiert ist. Die beidseitige Kaschierung der Lentikularscheibe mit demselben, von dem Material der Lentikularscheibe selbst abweichenden Material, insbesondere mit einem Kunststoffmaterial, wirkt der Durchbiegung entgegen und verbessert somit die Planität der Scheibe. Dasselbe gilt auch für die Trägerscheibe.

Zur Verbesserung der mechanischen Stabilität kann vorgesehen sein, daß ein Bereich der Umfassungsfläche der Trägerscheibe mittels eines umfangsverteilt mindestens abschnittsweise angeordneten Befestigungsmittels mit dem Fixierungsteil verbunden ist. Hierbei ist das Befestigungsmittel zumindest auf 5 %, bevorzugt mindestens 20 %, des Umfangs der Trägerscheibe angeordnet. In einer fertigungstechnisch vorteilhaften Ausbildung ist das Verbindungsmittel auch Befestigungsmittel.

Die Verbindungsmittel oder die Befestigungsmittel können in einer bevorzugten Ausbildung Klebestreifen sein, die auf die Umfassungsflächen aufgeklebt werden. Sie erfüllen die Erfordernisse einer geringen Materialstärke bei einer gleichzeitig hohen Verbindungskraft, die durch den Klebstoff vermittelt wird. Klebstreifen sind sehr kostengünstig. Ferner haben sie den Vorteil, daß sie flexibel sind, wodurch verbleibende Fertigungsungenauigkeiten ausgleichbar sind. Bei dem Verbindungsmittel sorgt die umfangsverteilte Anordnung für eine ausreichende Fixierung der Lentikularscheibe und gegebenenfalls der Fresnelscheibe zu der Trägerscheibe. Das die Trägerscheibe haltende Fixierungsteil kann auf dem die Umfassungsfläche der Trägerscheibe einfassenden Profil ebenfalls durch geeignete Verbindungsverfahren wie Kleben oder Schweißen mit der Trägerscheibe verbunden sein und Kräfte aufnehmen.

Aus dem modularen Aufbau einer Projektionswand mit Rückprojektionsmodulen ergeben sich weitere Anforderungen, denen eine praktisch vernünftige Lösung entsprechen soll.
Ein Rückprojektionsmodul ist meist mit einem die Lichteintrittsfläche des Projektionsschirms gegen Umgebungslicht abschirmenden Modulgehäuse versehen, an dessen Stirnseite der Projektsschirm angeordnet ist. Bei Rückprojektionsmodulen stellt sich somit das Problem, das Modulgehäuse derart auszubilden, daß die Rückprojektionsmodule aneinandergereiht werden können, der gesamte Aufbau keinen hohen Platzbedarf beansprucht, unaufwendig zu erstellen ist und dennoch die Möglichkeit bietet, die erforderlichen Wartungs- und Einstellarbeiten leicht ausführen zu können.

Zur Lösung dieses Problems wird vorgeschlagen, daß die Projektionseinrichtung in dem Innenraum des Modulgehäuses angeordnet ist, der Durchlicht-Bildgeber in einem Ausschnitt in einer Wandfläche des Modulgehäuses angeordnet ist, die Beleuchtungseinrichtung außerhalb des Modulgehäuses in einem Lichtquellengehäuse angeordnet ist, das an dem Ausschnitt des Modulgehäuses abnehmbar so auf das Modulgehäuse ansetzbar ist, daß es aus der Wandfläche des Modulgehäuses hervorsteht, und das Modulgehäuse in einem korrespondierenden Bereich, der für ein an einem benachbarten Rückprojektionsmodul angesetztes Lichtquellengehäuse vorgesehen ist, eine von seiner Außenseite her zugängliche Anschrägung, Öffnung oder Aussparung aufweist, die so ausgebildet ist, daß das Lichtquellengehäuse des benachbarten Rückprojektionsmoduls in dem korrespondierenden Bereich anordbar ist.

Durch diese Ausbildung des Modulgehäuses ist ein modularer Aufbau einer Projektionsbildwand mit aneinandergereihten und/oder gestapelten Rückprojektionsmodulen möglich, da die Modulgehäuse ineinander verschränkt bzw. sich gegenseitig durchdringend anordbar sind. Hiermit sind Vorteile in bezug auf die Einbautiefe des Rückprojektionsmoduls, den Platzbedarf der Anordnung und die Ermöglichung von Wartungs- und Justagearbeiten verbunden.

Die Projektionsschirme der Rückprojektionsmodule können dabei linear in einer Fläche neben- und/oder übereinander angeordnet werden, wodurch sich ein ebenflächiges Großbild ergibt. In anderen Anwendungsfällen kann es aber auch vorteilhaft sein, die Projektionsschirme polygonal in einer näherungsweise bogenförmigen Anordnung aneinanderzureihen, was mit der erfindungsgemäßen Ausbildung möglich ist.

In dem Lichtquellengehäuse sind die Lichtquelle, der Reflektor und der Kondensor angeordnet. Der Durchlicht-Bildgeber befindet sich an dem Übergang von dem Modulgehäuse zu dem Lichtquellengehäuse. Hiermit sind Vorteile hinsichtlich der Fertigung und Wartung des Rückprojektionsmoduls verbunden. Im Inneren des Modulgehäuses sind diejenigen Komponenten, die hohe Justageanforderungen bedingen, also alle, die den Projektionsteil betreffen. Beim Aufbau des Modulgehäuses müssen diese Komponenten hochpräzise eingestellt werden. Sie erfordern jedoch in der Regel beim normalen Betrieb des Rückprojektionsmoduls keine laufende Wartung, so daß die Wartungsarbeiten an der außerhalb des Modulgehäuses angeordneten Beleuchtungseinrichtung ohne dadurch erforderlich werdende Nachjustagearbeiten an den im Inneren des Modulgehäuses angeordneten Komponenten möglich sind.

Dagegen sind diejenigen Komponenten, die eine gelegentliche Wartung oder einen Austausch erfordern, wie die Komponenten der Beleuchtungseinrichtung oder der Durchlicht-Bildgeber, gut zugänglich. Da diese Komponenten keine sehr hohe Justagegenauigkeit erfordern, kann eine Wartung oder ein Austausch leicht und schnell erfolgen. In einer bevorzugten Ausbildung ist das Lichtquellengehäuse in ein an dem Modulgehäuse angebrachtes Befestigungselement einhängbar, wodurch im Bedarfsfall das gesamte Lichtquellengehäuse schnell ausgewechselt werden kann.

Die erfindungsgemäße Ausbildung des Modulgehäuses bietet somit erhebliche Wartungs- und Platzvorteile.

Eine vorteilhafte Weiterbildung kann darin bestehen, daß das Modulgehäuse eine Rückwand aufweist, die der Stirnseite gegenüberliegend angeordnet ist, und mindestens zwei sich gegenüberliegende, die Stirnseite mit der Rückwand verbindende Seitenwände, wobei die Rückwand an dem Übergang zu der ersten Seitenwand die Anschrägung, Öffnung oder Aussparung aufweist, und in der zweiten Seitenwand der Ausschnitt für den Durchlicht-Bildgeber angeordnet ist. Diese Ausbildung kann fertigungstechnisch unaufwendig hergestellt werden. Die Seitenwand, in welcher der Ausschnitt für den Durchlicht-Bildgeber angeordnet ist, kann dabei eine waagrecht, senkrecht oder auch schräg verlaufende Wandfläche des Modulgehäuses sein. Besonders vorteilhaft ist es, wenn sich die Anschrägung, Öffnung oder Aussparung in senkrechter Richtung über die Rückwand und die erste Seitenwand erstreckt. In dieser Ausbildung verläuft die Seitenwand mit dem Ausschnitt für den Durchlicht-Bildgeber in senkrechter Richtung und das Lichtquellengehäuse ist am rückseitigen Ende der anderseitigen Wand angeordnet. Mit einem solchen Aufbau läßt sich mit einfachen konstruktiven Maßnahmen ein platzsparender Aufbau, bei dem die Komponenten besonders leicht gewartet und ausgetauscht werden können, erzielen.

Um die Bautiefe des Rückprojektionsmoduls oder des Lichtquellengehäuses zu reduzieren oder um die Wartung der Lichtquelle ohne Abnahme des Lichtquellengehäuses zu ermöglichen, kann es vorteilhaft sein, wenn in dem Lichtquellengehäuse ein Beleuchtungsumlenkspiegel angeordnet ist und die Lichtquelle der Beleuchtungseinrichtung von der Rückseite des Rückprojektionsmoduls zugänglich ist. Dadurch kann eine defekte Lichtquelle schnell ausgetauscht werden.

Bei bekannten Rückprojektionsmodulen kann mindestens ein zwischen der Projektionseinrichtung und dem Projektionsschirm im Abbildungsgang angeordneter Abbildungsumlenkspiegel vorgesehen sein, um die Einbautiefe des Rückprojektionsmoduls zu verkürzen. An die optische Qualität der Spiegel sind hohe Anforderungen zu stellen, und gute Ergebnisse lassen sich nur mit Planspiegeln aus Glas mit einer hohen Planität erreichen. Eine Anordnung, die zwei solche Abbildungsumlenkspiegel verwendet, ist aus dem Dokument US-5,048,949 bekannt. Mit bekannten Anordnungen von Abbildungsumlenkspiegeln ist es nicht möglich, sehr hohe Präzisionsanforderungen, insbesondere bei Rückprojektionsmodulen, die erfindungsgemäß mit im wesentlichen stegfrei aneinanderreihbaren Projektionsschirmen oder verschränkbaren Modulgehäusen ausgebildet sind, zu erfüllen.

Sowohl die mechanischen als auch die optischen Komponenten eines Rückprojektionsmoduls weisen nämlich unvermeidbare Fertigungstoleranzen auf, die sich auf die erzielbare optische Qualität nachteilig auswirken können. Von besonderer Bedeutung ist dabei die Verzeichnungsfreiheit des von einem Rückprojektionsmodul angezeigten Bildes. Bei einem einzelnen Rückprojektionsmodul ist die Verzeichnung des angezeigten Bildes von untergeordneter Bedeutung, da dem Auge eines Betrachters auch erhebliche Verzeichnungen nicht auffallen.

Diese Situation ist gänzlich anders gelagert, wenn mehrere Rückprojektionsmodule aneinandergereiht sind, um ein aus Teilbildern zusammengesetztes Großbild anzuzeigen. In diesem Fall sind in dem Bild gerade Linien vorhanden, die über benachbarte Projektionsschirme verlaufen. Auch sehr geringe Verzeichnungen sind dann sofort bemerkbar, da der Anschluß der geraden Linien an den Übergangen von einem Teilbild zu einem benachbarten versetzt verläuft. Die Verzeichnungsfreiheit muß daher extrem hoch sein und sollte kleiner als 0,1 %, bezogen auf die Bilddiagonale, bzw. kleiner als 1/10 der Bildpunktgröße oder des Bildpunktabstandes sein.

Diese Präzisionsanforderung läßt sich auch mit modernen Projektionstechnologien nicht ohne Justagemöglichkeit erfüllen, da unter anderem sowohl der Spiegel als auch die Auflage, auf der er angebracht ist, nicht hinreichend plan ist. Im Rahmen der Erfindung wurde gefunden, daß zur Kompensation von Abbildungsfehlern und restlichen Verzeichnungen aufgrund der Nichtplanität des Spiegels und aufgrund von Fertigungstoleranzen, beispielsweise in der Projektionseinrichtung, vorteilhafterweise vorgesehen sein kann, daß mindestens ein Abbildungsumlenkspiegel auf seiner Rückseite mehrere, flächig verteilte, einzeln längenveränderlich verstellbare Verstellelemente aufweist, mit denen die Spiegeloberfläche des Abbildungsumlenkspiegels in ihrer Krümmung geringfügig veränderbar ist. Durch Justage der Verstellelemente ist es dann möglich, durch die Projektionseinrichtung, die Nicht-Planität des Spiegels und andere mechanische Ungenauigkeiten im Rückprojektionsmodul hervorgerufene Restverzeichnungen zu kompensieren. Die Verstellwege der Verstellelemente sind dabei sehr klein und liegen typischerweise unter 1 mm.

Eine bevorzugte Ausbildung ist, daß vier Verstellelemente vorgesehen sind. Drei Verstellelemente reichen nicht aus, um eine Verzeichniskorrektur auf der gesamten Fläche des Projektionsschirmes durchzuführen, weshalb mindestens vier Verstellelemente erforderlich sind. Eine höhere Anzahl an Verstellelementen ist zwar möglich, aber praktisch kaum erforderlich. Die vier Verstellelemente sind vorteilhafterweise in den Eckpunkten eines Rechteckes angeordnet, da das Bild ein rechteckiges Format aufweist. Besonders vorteilhaft ist es, wenn das Verhältnis der Seitenlängen des Rechtecks dem des Bildformats entspricht.

Mit einem erfindungsgemäß verstellbaren, die Einbautiefe des Rückprojektionsmoduls verkürzenden Abbildungsumlenkspiegel können Restverzeichnungen in einer von den übrigen Komponenten entkoppelten, rückwirkungsfreien Weise kompensiert werden. Eine bevorzugte Ausbildung zur Erzielung einer verzeichnungsfreien Abbildung besteht darin, daß zwischen dem Durchlicht-Bildgeber und dem Projektionsschirm nur ein Abbildungsumlenkspiegel angeordnet ist und der Abbildungsumlenkspiegel im wesentlichen senkrecht orientiert ist. Die senkrechte Orientierung bedeutet dabei, daß es eine in der Spiegelebene verlaufende Gerade in Richtung der Schwerkraft gibt. Sofern der Spiegel leicht gekrümmt ist, bezieht sich dies auf eine gemittelte Spiegelebene. Im wesentlichen senkrecht bedeutet, daß der Winkel zwischen dieser Geraden und der Schwerkraft weniger als 10 °, bevorzugt weniger als 5 °, betragen soll. Im Rahmen der Erfindung wurde gefunden, daß bei nicht senkrecht angeordneten Abbildungsumlenkspiegeln die Gravitation Verformungen in dem Abbildungsumlenkspiegel hervorruft, die sich nachteilig auf die optische Abbildung auswirken. Durch die erfindungsgemäße Maßnahme werden die durch die Schwerkraft hervorgerufenen Verformungen reduziert oder gänzlich ausgeschaltet.

Zur Erzielung einer besonders kurzen Einbautiefe eines Rückprojektionsmoduls, insbesondere eines im wesentlichen stegfrei aneinanderreihbaren Rückprojektionsmoduls oder eines Rückprojektionsmoduls mit mindestens einem Abbildungsumlenkspiegel, wird ferner vorgeschlagen, daß das Projektionsobjektiv der Projektionseinrichtung eine Schnittweite hat, die in einem Bereich von 10 % kleiner bis 10 % größer als die Bilddiagonale des Projektionsschirms liegt. Unter Schnittweite versteht man die Entfernung zwischen der optischen Hauptebene des Projektionsobjektives und dem Projektionsschirm, also dem Bild.

Nach dem Stand der Technik ist die Schnittweite um mehr als 20 % größer als die Bilddiagonale. Die Ursache hierfür liegt darin, daß man es bisher nicht für möglich gehalten hat, bei kleineren Schnittweiten die geforderte Abbildungsqualität zu erzielen. Im Rahmen der Erfindung wurde überraschend gefunden, daß auch Projektionsobjektive mit großer Apertur in der erforderlichen Qualität mit kleinen Schnittweiten technisch problemlos realisierbar sind. Insbesondere mit den weiteren erfindungsgemäßen Maßnahmen zur Verbesserung des Rückprojektionsmoduls, vor allem in bezug auf die Beleuchtungseinrichtung, können dabei hohe Qualitätsanforderungen an die optische Abbildung erfüllt werden. Die Schnittweite sollte jedoch nicht mehr als 10 % kleiner als die Bilddiagonale sein, da dann die optischen Eigenschaften der Fresnellinse, insbesondere deren Fresnelstruktur, zu einer verstärkten Bildung von Geisterbildern führen.

Insbesondere bei einer erfindungsgemäßen Ausbildung des Projektionsschirmes mit einem Halteelement ist es vorteilhaft, wenn die Schnittweite des Projektionsobjektivs kurz ist, da hierdurch nicht nur eine reduzierte Bautiefe des Rückprojektionsmoduls erreicht wird, sondern auch ein kleiner Winkel des zu einem randnächsten Bildpunkt gehörenden Lichtstrahles zu der Trägerscheibe (entsprechend einem großen Winkel zu der optischen Achse), gemessen auf der Lichteintrittsseite der Trägerscheibe. Dadurch kann die Materialstärke des Halteelementes bzw. des Fixierungsteils und damit auch die Festigkeit hoch sein. Bei einem keilförmig ausgebildeten Fixierungsteil wird hierdurch ein großer Keilwinkel ermöglicht und die Stabilität optimiert.

Ein weiteres vorteilhaftes Ausbildungsmerkmal besteht noch darin, daß das Projektionsobjektiv ein Objektiv mit nahezu fester Brennweite ist, die um mehr als 0,01 % aber weniger als 0,5 % veränderlich einstellbar ist. Hierdurch sind Fertigungstoleranzen von Projektionsobjektiv und anderen Komponenten des Rückprojektionsmoduls ausgleichbar, und die Bildgröße kann an die Größe des Projektionsschirms angepaßt werden.

Ein allgemeines Problem bei Projektionsapparaten zum Projizieren eines Bildes auf einen großflächigen Projektionsschirm, die einen Durchlicht-Bildgeber zum Darstellen des Bildes in einem verkleinerten Maßstab, eine Beleuchtungseinrichtung zum Durchleuchten des Durchlicht-Bildgebers und eine Projektionseinrichtung zum vergrößerten Abbilden des von dem Durchlicht-Bildgeber dargestellten Bildes auf den Projektionsschirm umfassen, wobei die Beleuchtungseinrichtung eine Lichtquelle, einen Reflektor und einen Kondensor zur Ausleuchtung des Durchlicht-Bildgebers aufweist, besteht in dem Abfall der Lichthelligkeit vom Zentrum des Bildes zu dessen Rand und zu dessen Ecken hin. Diese Erscheinung wird in der Fachwelt als "Hot-Spot" bezeichnet.

Dieser Lichtabfall ist durch die physikalischen Eigenschaften der optischen Komponenten bedingt, wobei insbesondere die Beleuchtungseinrichtung, und dabei insbesondere die Linsen des Kondensors, zu dieser Erscheinung beitragen. Eine konventionelle, sphärische Kondensorlinse beleuchtet den Durchlicht-Bildgeber nach einem CosinusGesetz. Zudem ist auch die Lichtausbeute bekannter Projektionsapparate nicht zufriedenstellend.

Konventionelle Projektionsapparate, wie beispielsweise Overhead-Projektoren, Diaprojektoren oder Rückprojektionsmodule, weisen demzufolge eine erheblich ungleichmäßige Verteilung der Bildhelligkeit auf. In den meisten Fällen ist dies jedoch nicht störend, weil bei einem einzelnen angezeigten Bild auch starke Intensitätsunterschiede einem menschlichen Betrachter kaum auffallen.

Dies ändert sich aber sofort, wenn von jeweils einem Projektionsapparat projizierte Teilbilder zur Darstellung eines zusammengesetzten Gesamtbildes neben- und/oder übereinandergereiht werden. Bei einer solchen Anordnung fällt einem Betrachter auch ein geringer Intensitätsabfall in den Teilbildern vom Zentrum zu den Rändern hin auf. Das Gesamtbild erscheint dann fleckig, mit jeweils einem hellen Bereich in den Zentren der Teilbilder, dem Hot-Spot, und einem streifen- bzw. schachbrettartig erscheinenden Muster in den Übergangsbereichen zwischen den Teilbildern. Diese Erscheinung ist auch von bekannten aneinandergereihten Rückprojektionsmodulen bekannt, wo bisher für dieses aus der Modularität des Gesamtbildes resultierende, eine zentrale Schwierigkeit darstellende Beleuchtungsstärkenproblem keine Lösung bestand.

Die Schwierigkeiten mit dem Intensitätsabfall zum Rand des Bildes hin nehmen bei aneinandergereihten Rückprojektionsmodulen noch erheblich zu, wenn erfindungsgemäß im wesentlichen stegfrei ausgebildete Projektionsschirme aneinandergereiht werden, da hierdurch der nahezu steg- und nahtlose Anschluß der Teilbilder nicht voll zur Geltung kommen kann, insbesondere wenn wie im Rahmen der Erfindung möglich, Durchlicht-Bildgeber mit großen Bilddiagonalen, Projektionsobjektive mit kurzen Schnittweiten, Projektionsschirme mit großen Bilddiagonalen oder allgemein große Aperturen zum Einsatz kommen.

Im Rahmen der Optimierung des erfindungsgemäßen Rückprojektionsmoduls hat sich überraschenderweise herausgestellt, daß diese Nachteile, auch bei den oben beschriebenen allgemeinen Projektionsapparaten, dadurch vermieden werden können, daß der Kondensor eine Freiform-Kondensorlinse umfaßt.

Eine Freiform-Kondensorlinse ist eine nicht-rotationssymmetrische Kondensorlinse, deren optische Fläche unter Zugrundelegung physikalisch-mathematischer Modelle berechnet werden kann. Bei Vorgabe einer bestimmten Lichtquellenintensitätsverteilung können die Modelle verschiedenste Einflüsse der optischen Komponenten berücksichtigen, um eine zur Erzielung gewünschter Abbildungseigenschaften, beispielsweise in Bezug auf Helligkeitsverteilung und Intensität, taugliche Form der Freiform-Kondensorlinse zu berechnen. Beispielsweise kann die Linsenoberfläche einer Freiform-Kondensorlinse durch Spline-Flächen dargestellt und die Berechnung durch Optimierung einer Flächenwirkung einer durch Kontrollpunkte festgelegten Spline-Fläche in B-Spline-Darstellung mit Hilfe des Gauß-Newton-Verfahrens, die auf bekannte Algorithmen aus der numerischen Mathematik und die Theorie der Spline-Flächen zurückgreift, durchgeführt werden.

Die Freiform-Kondensorlinse kann so ausgebildet werden, daß der Lichtabfall zum Rand hin zumindest teilweise bis nahezu vollständig kompensiert wird, indem die von der von der Freiform-Kondensorlinse erzeugte Intensitätsverteilung zum Bildrand hin derart überhöht wird, daß sich bei der Abbildung insgesamt eine nahezu gleichmäßige Bildhelligkeit ergibt. Bei der Berechnung der Freiform-Kondensorlinse können je nach Anforderung in bezug auf die zu erzielende Qualität der optischen Abbildung, auch unter dem Gesichtspunkt der Verzeichnungsfreiheit, der Abbildungsschärfe und deren Gleichmäßigkeit über das Bild, der Farbgleichmäßigkeit, die im Einzelfall zu beachtenden Einflüsse einzelner oder aller optischen Komponenten, insbesondere aber deren Lichtabschwächung in den Randbereichen, durch Modellbildung mitberücksichtigt werden.

Dabei haben die Freiform-Kondensorlinsen die weiteren Vorteile, daß sie besonders preiswert herstellbar sind, beispielsweise mittels Preßformen, eine kleine Baugröße aufweisen und keine hohe Justagegenauigkeit relativ zur Lichtquelle erfordern.

Diese vorteilhaften Eigenschaften einer Freiform-Kondensorlinse sind auch bei allgemeinen Projektionsapparaten von Vorteil. Insbesondere bei Overhead-Projektoren, bei denen Durchlicht-Bildgeber mit einer Bilddiagonale größer als 21 cm, insbesondere größer als 26 cm verwendet werden, kann mit einer Freiform-Kondensorlinse die Qualität der optischen Abbildung beträchtlich verbessert werden. Ein konventioneller Overhead-Projektor zur Projektion eines Bildes weist in Reihenfolge der Lichtausbreitung eine Lichtquelle, einen Reflektor, eine Kondensorlinse, eine Fresnellinse, einen Durchlicht-Bildgeber und ein Projektionsobjektiv auf. Erfindungsgemäß wird die Kondensorlinse durch eine Freiform-Kondensorlinse ersetzt.

Ein besonderer Vorteil von Freiform-Kondensorlinsen in Projektionsapparaten, insbesondere in vorbekannten oder erfindungsgemäßen Rückprojektionsmodulen, besteht darin, daß störende Effekte der Lichtquelle ausgeglichen werden können. Im Rahmen der Erfindung wurde gefunden, daß Eigenschaften der Lichtquelle, wie die nicht punktförmige Ausdehnung des Brennflecks, Reflexe am Außenkolben, Farbseparationserscheinungen und gegebenenfalls Polkappen, Rückführdrähte oder Abschmelzstutzen zu einer ungleichmäßigen Verteilung des Lichts führen können und mittels der Freiform-Kondensorlinse in hohem Maße ausgleichbar sind.

Nach einem weiteren vorteilhaften Merkmal wird vorgeschlagen, daß der Reflektor des Projektionsapparats eine zur optischen Achse rotationssymmetrische, elliptisch gekrümmte Oberfläche aufweist. Hierdurch kann die Lichtintensität durch Verbesserung der Lichtausbeute gesteigert werden. Bisherige Projektionsapparate verwenden parabolisch geformte Reflektoren, da die optischen Eigenschaften elliptischer Reflektoren in bezug auf die Lichtgleichverteilung deutlich nachteiliger sind. Im Rahmen der Erfindung wurde gefunden, daß durch die Kombination mit einer Freiform-Kondensorlinse diese Nachteile vermieden werden können und eine große Nutzung des von der Lichtquelle abgestrahlten Lichtes möglich wird. Hierbei lassen sich bei der Lichtausbeute Raumwinkel von über 72 % von 4 Pi bei einer gleichzeitig gleichmäßigeren Verteilung der Beleuchtungsstärke erzielen. Bekannte Projektionsapparate erreichen nur etwa die Hälfte dieses Raumwinkels bei dennoch schlechterer Beleuchtungsstärkeverteilung.

Nach einem weiteren bevorzugten Merkmal wird vorgeschlagen, daß die Freiform-Kondensorlinse so ausgebildet ist, daß die von dem Reflektor erzeugte Lichtverteilung mittels der Freiform-Kondensorlinse in eine dem rechteckigen Format des Bildes bzw. der Durchlicht-Bildgebers angepaßte Lichtverteilung umgewandelt wird. Bei der Umwandlung werden Lichtanteile, die außerhalb des Objektformats liegen, in das Objektformat transferiert. Auch wenn das außerhalb des Objektformats fallende Licht nicht vollständig in das Objektformat überführt werden kann, wird dabei ein Intensitätsgewinn erzielt.

Mit rotationssymmetrischen Kondensorlinsen läßt sich die beleuchtete Fläche nicht an das Objektformat anpassen. Im Stand der Technik sind Kondensorlinsen bekannt, die aus zwei hintereinander angeordneten Segmentlinsen bestehen, wobei jede Segmentlinse eine Vielzahl an kleinen Segmenten aufweist. In Kombination mit einem parabolisch geformten Reflektor kann damit die Lichtverteilung auf ein rechteckiges Objektformat zur Verbesserung der Lichtausbeute erreicht werden. Nachteilig bei dieser Anordnung ist, daß sie eine große Einbaulänge aufweist und der Cosinus-Abfall der Beleuchtungsstärke am Rand nicht kompensiert wird. Weiter ist die Lichtausbeute mit dem parabolisch geformten Reflektor nicht optimal. Die erfindungsgemäße Ausbildung vermeidet diese Nachteile.

Ein Projektionsapparat mit einer erfindungsgemäß ausgebildeten Freiform-Kondensorlinse, beispielsweise ein Rückprojektionsmodul mit einem Projektionsschirm mit einer Diagonale über 50 cm, einer Schnittweite des Projektionsobjektivs unter 150 cm, einem Durchlicht-Bildgeber mit einer Bilddiagonale von etwa 10 Zoll, einer Ausdehnung des Brennflecks der Lichtquelle von etwa 4 mm und einem elliptisch geformten Reflektor kann durch Optimierung der Freiform-Kondensorlinse zur Verbesserung der optischen Qualität so ausgebildet sein, daß die Beleuchtungsstärke des projizierten Bildes weniger als 25 %, bevorzugt weniger als 15 % von einem mittleren Wert abweicht. Dies ist insbesondere bei der Verwendung von Flüssigkristall-Anzeigevorrichtungen als Durchlicht-Bildgeber der Fall. Das Projektionsobjektiv kann vorteilhafterweise so ausgebildet sein, daß die Verzeichnung des projizierten Bildes kleiner als 0,1 % ist.

Der Kontrast und die Kontrastverteilung von Flüssigkristall-Anzeigevorrichtungen sind stark abhängig vom Winkel des einfallenden Lichtes. Bei bekannten Projektionsapparaten wird ein Kondensor, beispielsweise ein Fresnel-Kondensor in den Strahlengang vor die Flüssigkristall-Anzeigevorrichtung eingebracht. Dieser Kondensor bündelt dann das Licht durch den Durchlicht-Bildgeber auf das Projektionsobjektiv. Aus diesem Grund verlaufen die Lichtstrahlen mit einem zum Rand des Durchlicht-Bildgebers hin zunehmenden Winkel durch den Durchlicht-Bildgeber, wobei der Winkel zu der optischen Achse in den Randbereichen um so größer wird, je größer die Bilddiagonale des Durchlicht-Bildgebers ist. Dies führt zu verstärktem Kontrastabfall vom Zentrum des Bildes zum Rand hin, insbesondere bei Flüssigkristall-Anzeigevorrichtungen.

Diese Nachteile vermeidet die vorgeschlagene Ausbildung der Projektionseinrichtung, die eine auf der Lichtaustrittsseite des Durchlicht-Bildgebers angeordnete Fresnellinse umfaßt, da hierdurch eine zur optischen Achse parallele Durchleuchtung des Durchlicht-Bildgebers möglich ist. Die Fresnellinse sollte, wie auch der Kondensor bzw. Fresnel-Kondensor, möglichst nahe an dem Durchlicht-Bildgeber angeordnet sein, um das Licht effektiv auf ein weiter vom Durchlicht-Bildgeber entfernt angeordnetes Projektionsobjektiv bündeln zu können.

Nach einem weiteren vorteilhaften Merkmal wird vorgeschlagen, daß die Fresnellinse bei der Bestimmung des Projektionsobjektivs berücksichtigt ist. Die Fresnellinse wird dabei als Teil des Projektionsobjektivs der Projektionseinrichtung berücksichtigt und im Rahmen ihrer modellhaften Darstellung ebenso wie die sonstigen Parameter des Projektionsobjektivs zur Optimierung der Abbildungseigenschaften variiert. Dadurch läßt sich auch mit einer Fresnellinse eine verzeichnungsarme und scharfe Abbildung erreichen. Wenn die Fresnel-Feldlinse nicht bei der Berechnung des Projektionsobjektivs berücksichtigt ist, wird zwar die Helligkeit des Bildes, nicht aber die Verzeichnungsfreiheit und die Abbildungsschärfe erhöht.

Eine bevorzugte Ausbildung besteht darin, daß die Fresnelstruktur der Fresnellinse auf der dem Durchlicht-Bildgeber zugewandten Seite angeordnet ist, da dabei die Qualität der optischen Abbildung besser als im umgekehrten Fall sein kann. Sofern der Kondensor in einer vorteilhaften Ausbildung einen Fresnel-Kondensor umfaßt, ist es auch hierbei von Vorteil, wenn die Fresnelstruktur des Fresnel-Kondensors auf der dem Durchlicht-Bildgeber zugewandten Seite angeordnet ist.

Die Vorteile eines Rückprojektionsmoduls nach dieser Erfindung gegenüber dem Stand der Technik bestehen darin, daß Teilbilder einzelner Module im wesentlich stegfrei aneinanderreihbar sind. Dabei kann eine Gleichverteilung der Abbildungsschärfe und der Helligkeit vom Zentrum eines Bildes bis in die Ecken und Randbereiche erzielt werden. Die Bilder weisen auch bei nicht sehr hohen Leistungen der Lichtquelle eine hohe Helligkeit auf und sind in einem sehr hohen Maße frei von Verzeichnungen und Verzerrungen. Die Rückprojektionsmodule können so ausgebildet werden, daß die Bautiefe gering ist und Wartungsarbeiten leicht durchführbar sind. Die einzelnen erfindungsgemäßen Maßnahmen können einzeln oder auch vorteilhafterweise in Kombination miteinander angewandt werden, wobei sich durch das Zusammenwirken erfindungsgemäßer Merkmale zusätzliche vorteilhafte Wirkungen ergeben können. Einige der im Rahmen der Erfindung zur Verbesserung bekannter Rückprojektionsmodule gefundenen Maßnahmen lassen sich vorteilhaft auch bei allgemeinen Projektionsapparaten einsetzen.

Die folgenden Ausführungsbeispiele der Erfindung lassen weitere vorteilhafte Merkmale und Besonderheiten erkennen, die anhand der schematischen Darstellung in den Zeichnungen im folgenden näher beschrieben und erläutert werden.

Es zeigen
- Fig. 1: eine schematische Darstellung eines Projektionsapparates,
- Fig. 2: eine schematische Darstellung einer Rückprojektion mittels eines Projektionsapparates,
- Fig. 3: eine schematische Darstellung einer verbesserten Rückprojektion mittels eines Projektionsapparates,
- Fig. 4: eine Aufsicht auf eine bekannte Großbild-Rückprojektionswand,
- Fig. 5: eine Einzelheit zu Fig. 4,
- Fig. 6: einen schematischen Schnitt durch einen erfindungsgemäßen Projektionsschirm,
- Fig. 7: eine Abwandlung zu Fig. 6,
- Fig. 8: eine Einzelheit zu Fig. 7,
- Fig. 9: einen waagrechten Schnitt durch ein erfindungsgemäßes Rückprojektionsmoduls,
- Fig. 10: eine Einzelheit zu Fig. 9,
- Fig. 11: eine Einzelheit zu Fig. 10,
- Fig. 12: eine Einzelheit zu Fig. 11,
- Fig. 13: ein erfindungsgemäßes Modul- und Lichtquellengehäuse,
- Fig. 14: vier erfindungsgemäße Modul- und Lichtquellengehäuse,
- Fig. 15: einen waagerechten Schnitt zu Fig. 14,
- Fig. 16: eine Aufsicht auf nebeneinandergereihte Rückprojektionsmodule,
- Fig. 17: eine Aufsicht auf polygonal aneinandergereihte Rückprojektionsmodule,
- Fig. 18: eine schematische Ansicht von sechs Rückprojektionsmodulen,
- Fig. 19: die Rückseite eines Abbildungsumlenkspiegels,
- Fig. 20: einen Schnitt zu Fig. 19,
- Fig. 21: eine schematische Ansicht zu Fig. 19,
- Fig. 22: eine Einzelheit zu Fig. 21,
- Fig. 23: die Lichtverteilungsänderung einer Freiform-Kondensorlinse,
- Fig. 24: die Vorderansicht eines abgewandelten Rückprojektionsmoduls,
- Fig. 25: eine geschnittene Seitenansicht zu Fig. 24, und
- Fig. 26: diverse Gleichungen zu einer Freiform-Kondensorlinse.

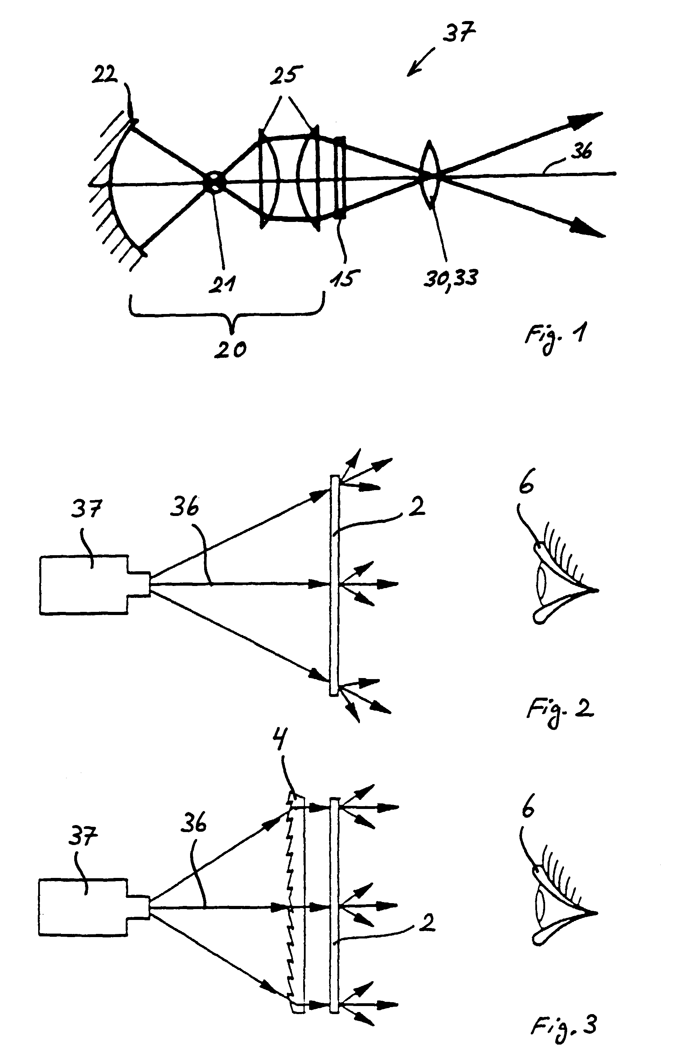

Die Figur 1 zeigt eine schematische Darstellung eines Projektionsapparates 37 nach dem Stand der Technik zum Projizieren eines vergrößerten Bildes eines Durchlicht-Bildgebers 15. Der Durchlicht-Bildgeber 15 kann beispielsweise ein Dia, ein Film oder eine Flüssigkristall-Anzeigevorrichtung sein. Der Durchlicht-Bildgeber 15 wird von der Lichtquelle 21 beleuchtet. Um einen möglichst großen Teil des von der Lichtquelle 21 ausgestrahlten Lichtes zu nutzen, verwendet man eine spezielle Beleuchtungseinrichtung 20. Mittels eines Reflektors 22 gelangt ein wesentlicher Teil des nach hinten abgestrahlten Lichtes auf den Durchlicht-Bildgeber 15. Zwischen der Lampe 21 und dem Durchlicht-Bildgeber 15 befindet sich der Kondensor 25, der aus mehreren Kondensorlinsen bestehen kann. Auf der Lichtaustrittsseite des Kondensors 25 sind die Lichtstrahlen nicht parallel zur optischen Achse 36, sondern konvergent.

Durch die Projektionseinrichtung 30, die mindestens ein Projektionsobjektiv 33 umfaßt, wird das Bild des Durchlicht-Bildgebers 15 vergrößert auf einen nicht dargestellten Projektionsschirm projiziert. Bei einem Auflicht-Projektionsschirm wird das Bild von der Seite des Projektionsschirms betrachtet, auf der auch das Licht einfällt. Bei einer Rückprojektion wird das projizierte Bild von der der Lichteinfallsseite gegenüberliegenden Seite des Projektionsschirms betrachtet. Bei einem Overhead-Projektor befindet sich zwischen dem Projektionsobjektiv 33 und dem Projektionsschirm meist noch ein Lichtumlenkspiegel im Abbildungsstrahlengang.

Die Figur 2 zeigt eine schematische Darstellung einer Rückprojektion mittels eines Projektionsapparates 37 auf einen Projektionsschirm 2. Durch Pfeile auf der Lichtaustrittsseite des Projektionsschirms 2 ist die winkelabhängige Intensitätsverteilung der Bildpunkte angedeutet. Man erkennt, daß auch für einen auf der optischen Achse 36 angeordneten Beobachter 6 die Bildhelligkeit zum Rand und zu den Ecken des Bildes hin abnimmt. Bei Veränderung der Position des Beobachters 6, insbesondere bei einer zu der optischen Achse 36 senkrechten Bewegung verschiebt sich die Intensitätsverteilung stark. Die blickwinkelabhängige Helligkeit ist insbesondere bei aus mehreren Projektionsschirmen 2 zusammengesetzten Großbildwänden störend, da dort mehrere Projektionsschirme 2 gleichzeitig, aber unter verschiedenen Blickwinkeln betrachtet werden.

Die Figur 3 zeigt eine schematische Darstellung einer verbesserten Rückprojektion gemäß Figur 2 mittels eines Projektionsapparates 37, wobei zusätzlich eine Fresnelscheibe 4 vor dem Projektionsschirm 2 angeordnet ist. Dadurch kann erreicht werden, daß für einen Betrachter 6 die Bildhelligkeit unter einem bestimmten Betrachtungswinkel gleichmäßiger ist.

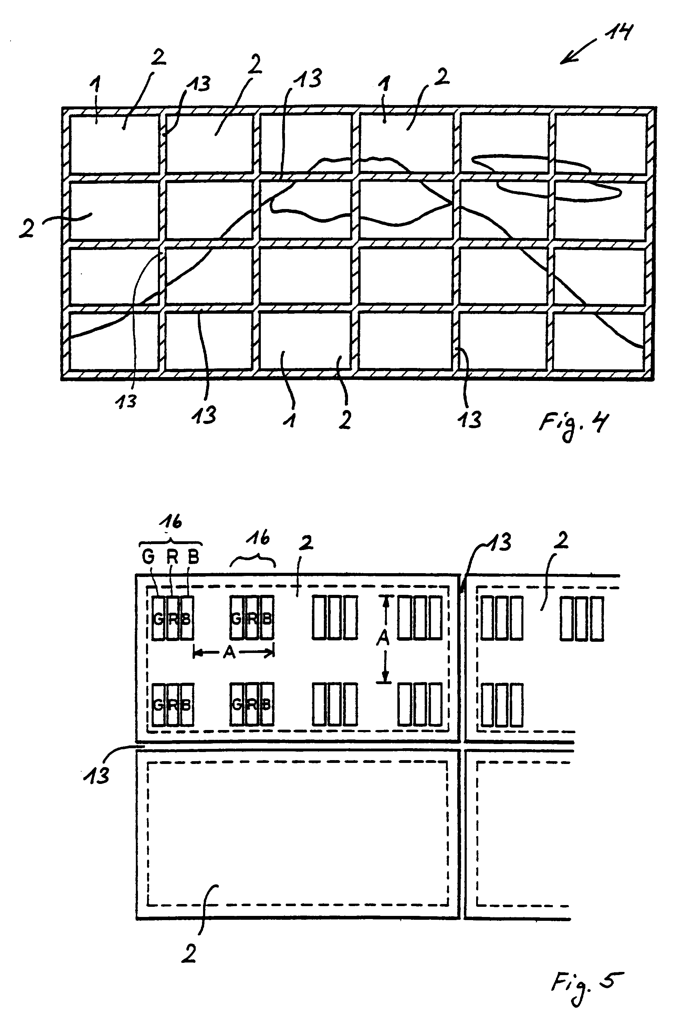

Die Figur 4 zeigt eine schematische Ansicht des von einer Großbildwand 14 angezeigten Bildes. Das Bild besteht aus mehreren Teilbildern, die jeweils von Rückprojektionsmodulen 1 auf Projektionsschirmen 2 angezeigt werden. Die Darstellung macht deutlich, daß es zur Erzielung einer vorteilhaften Bildwirkung nicht ausreicht, wenn die unter verschiedenen Blickwinkeln gleichzeitig betrachteten Projektionsschirme 2 eine untereinander gleiche Bildhelligkeit aufweisen, was durch eine gegenüber der Figur 3 zusätzlich auf der Lichtaustrittsseite der Projektionsschirme 2 angebrachten Lentikularscheibe erreicht werden kann. Aus statischen und aus optischen Gründen erscheinen nämlich die einzelnen Projektionsschirme 2 bei Rückprojektionsmodulen 1 nach dem Stand der Technik durch einen Steg 13 getrennt, der dem projizierten Gesamtbild ein schachbrettartiges Aussehen verleiht.

Dies ist zum einen darauf zurückzuführen, daß die Projektionsschirme 2 in ihren Randbereichen mechanisch gehaltert werden müssen und die dazu erforderlichen, bekannten Halteelemente es nicht ermöglichen, die Projektionsschirme 2 unmittelbar aneinander stoßen zu lassen. Ferner treten bei den Halteelementen bekannter Rückprojektionsmodule 1 Abschattungswirkungen auf, die verhindern, daß das von der Rückseite auf den Projektionsschirm 2 projizierte Licht auf dessen Lichtaustrittsseite bis an den Rand gelangen kann, wodurch ebenfalls die dunkle Streifenbildung bewirkt wird. Ein Aspekt der Erfindung richtet sich daher darauf, die Rückprojektionsmodule 1 derart auszubilden, daß sie im wesentlichen ohne Stege 13 aneinandergereiht und/oder übereinander gestapelt werden können.

Aber auch wenn die Projektionsschirme 2 im wesentlichen stegfrei aneinandergereiht sind, kann der modulare Aufbau der Großbildwand 14 noch sichtbar sein. Dies ist darauf zurückzuführen, daß aus optischen Gründen bisher bekannte Projektionsmodule 1 eine Lichtverteilung auf dem Projektionsschirm 2 erzeugen, die im Zentrum jeweils eine höhere Intensität aufweist als am Rand. Durch die Aneinanderreihung oder Matrixanordnung der Rückprojektionsmodule 1 entsteht dadurch ein Großbild, das ein periodisches Muster von Hell-Dunkel-Schwankungen aufweist, die den modularen Aufbau nach wie vor erkennen lassen. Ein weiterer Aspekt der Erfindung richtet sich daher darauf, den Lichtabfall vom Zentrum zum Rand eines Projektionsschirms 2 zu reduzieren oder zu kompensieren.

In Figur 5 ist in einer Einzelheit zu Figur 4 schematisch dargestellt, wie die Bildpunkte 16 auf dem Projektionsschirm 2 angeordnet sind. Es handelt sich um die Projektion eines von einer farbigen Flüssigkristall-Anzeigevorrichtung dargestellten Bildes. Jeweils drei Subpixel grün, rot und blau liegen dicht nebeneinander und ergeben in ihrer Summe einen Bildpunkt 16 des angezeigten Bildes. Die Bildpunkte 16 folgen in einem Abstand A aufeinander. Die gestrichelte Linie deutet denjenigen inneren Bereich des Projektionsschirmes 2 an, auf den Licht projiziert werden kann. Aus dieser Darstellung wird deutlich, daß es nicht erforderlich ist, die Rückprojektionsmodule 1 so auszubilden, daß die Bildpunkte 16 an den Rändern der Projektionsschirme 2 unmittelbar aneinander anliegen, da es aufgrund der Pixelstruktur des angezeigten Bildes ausreichend ist, wenn der realisierbare Abstand zwischen zwei benachbarten, auf benachbarte Projektionsschirme projizierten Bildpunkten in etwa dem Abstand A der Bildpunkte 16 auf dem Projektionsschirm 2 entspricht.

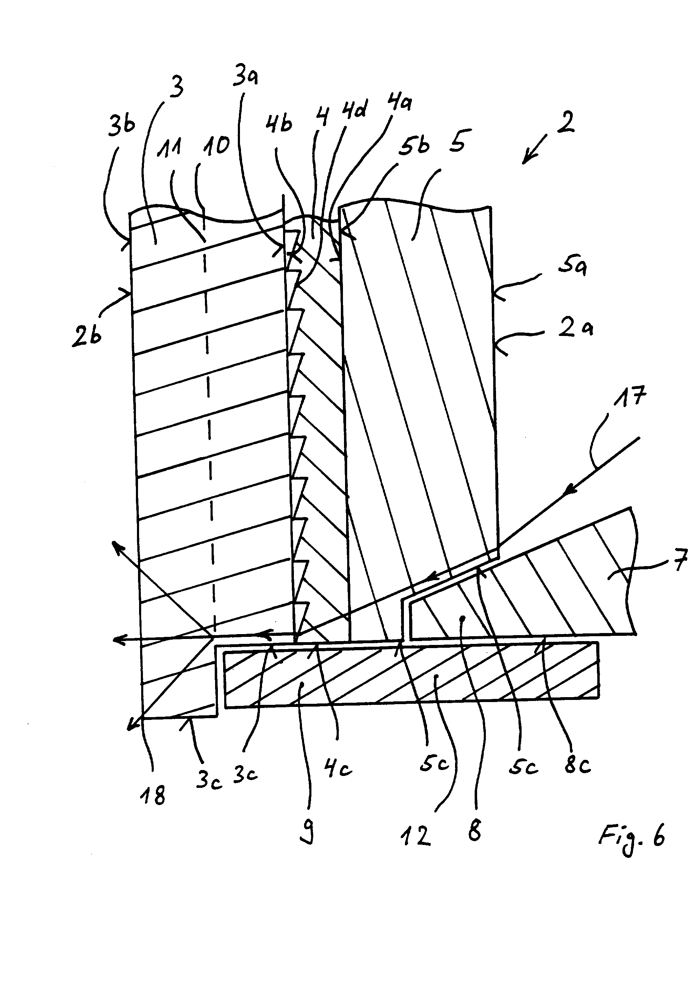

Die Figur 6 zeigt beispielhaft einen schematischen Schnitt durch einen erfindungsgemäßen Projektionsschirm 2 eines Rückprojektionsmoduls 1, mit dem erreicht wird, daß die Bilder nebeneinander angeordneter Projektionsschirme 2 im wesentlichen stegfrei ausgebildet sind. Der Projektionsschirm 2 weist eine Lichteintrittsseite 2a und eine Lichtaustrittsseite 2b auf. Er umfaßt eine Lentikularscheibe 3, eine Fresnelscheibe 4 und eine Trägerscheibe 5. Die Lentikularscheibe 3 weist auf ihrer Austrittsfläche 3b eine nicht dargestellte Lentikularstruktur mit Black-Matrix-Struktur auf. Die Fresnelstruktur 4d der Austrittsfläche 4b der Fresnelscheibe 4 ist der Eintrittsfläche 3a der Lentikularscheibe 3 zugewandt. Zwischen der Austrittsfläche 5b der Trägerscheibe 5 und der Eintrittsfläche 4a der Fresnelscheibe 4 sind zur Erzielung eines nicht dargestellten Spaltes den Flächenabstand sichernde Abstandselemente angeordnet, die ebenfalls nicht dargestellt sind.

In der Bildebene 10 der Lentikularscheibe 3 befinden sich kleine Streukörper 11, durch die das Licht diffus gestreut wird. Die Dicke der Trägerscheibe 5 beträgt 6 mm, die Dicke der Fresnelscheibe 4 0,7 mm und die Dicke der Lentikularscheibe 3 5,6 mm, wobei der Abstand der Bildlage 10 zu der Austrittsfläche 3b 1,2 mm beträgt. Die Flächendimension der Eintrittsfläche 5a der Trägerscheibe 5 ist kleiner als die Flächendimension der Austrittsfläche 5b, die der Flächendimension der Eintrittsfläche 4a und Austrittsfläche 4b der Fresnelscheibe 4 entspricht. Die Flächendimension der Eintrittsfläche 3a der Lentikularscheibe 3 ist kleiner als die Flächendimension der Austrittsfläche 3b, und zwar um 0,6 mm. Die Austrittsfläche 3b der Lentikularscheibe 3 steht somit beidseitig um 0,3 mm über die Eintrittsfläche 3a über.

Ein Bereich der Umfassungsfläche 5c der Trägerscheibe 5, die die Eintrittsfläche 5a mit der Austrittsfläche 5b verbindet, wird von einem Fixierungsteil 8 gehalten, das der in Ausbreitungsrichtung des projizierten Lichtes am Ende gelegene Teilabschnitt eines Halteelements 7 ist. Das Halteelement 7 hält den Projektionsschirm 2 von der Seite der Eintrittsfläche 2a. Das Fixierungsteil 8 ist als stumpfer Keil ausgebildet, und die Trägerscheibe 5 ist an ihrer die Eintrittsfläche 5a mit der Austrittsfläche 5b verbindenden Umfassungsfläche 5c entsprechend profiliert. Das Fixierungsteil 8 dringt auf einer Länge von etwa der Hälfte bis zwei Drittel der Dicke der Trägerscheibe 5 von der Eintrittsfläche 5a in die Trägerscheibe 5 ein.

Die Umfassungsfläche 5c der Trägerscheibe 5 und das Fixierungsteil 8 sind so ausgebildet, daß der Lichtstrahl 17 eines randnächsten Bildpunktes den Rand der Fresnelstruktur 4d der Fresnelscheibe 4 erreichen kann, von wo er in den Rand der Eintrittsfläche 3a der Lentikularscheibe 3 eintritt. Das Profil der Umfassungsfläche 5c kann dabei im Prinzip beliebig gestaltet werden. Je dicker das Fixierungsteil 8 ist, desto größer ist die mechanische Festigkeit der Halterung des Projektionsschirms 2. Bei einer keilförmigen Ausbildung kann eine optimale Materialstärke erreicht werden, wobei der Lichtstrahl 17 das Profil streifend durch die Trägerscheibe 5 verläuft.

Die Umfassungsfläche 5c der Trägerscheibe 5 ist in einem Bereich des Zwischenraums zu dem Fixierungsteil 8 mittels einer geeigneten Verbindungstechnik mit dem Fixierungsteil 8 verbunden, beispielsweise durch Kleben oder Ultraschallschweißen. Die Umfassungsfläche 5c der Trägerscheibe 5 kann auch treppen- oder stufenförmig oder andersartig ausgebildet sein, wobei immer darauf zu achten ist, daß der Randstrahl 17 sich ungehindert bis zum Rand der Lentikularscheibe 4 ausbreiten kann. Vorzugsweise sollte der Abstand des Lichtstrahls 17 eines randnächsten Bildpunktes an der Austrittsfläche 4c der Fresnelscheibe 4 von deren Rand nicht mehr als 1,0 mm, bevorzugt nicht mehr als 0,5 mm betragen.

Die Umfassungsfläche 3c der Lentikularscheibe 3 ist ebenfalls stufenförmig ausgebildet. Die Stufe befindet sich nicht innerhalb des Bereichs zwischen der Austrittsfläche 3b und der Bildebene 10, so daß das von den Streukörpern 11 gestreute Licht durch die Kante 18 zwischen der Austrittsfläche 3b und der Umfassungsfläche 3c austreten kann. Dadurch wird der Zwischenraum zwischen zwei benachbarten Projektionsscheiben 2 aufgehellt und das Bild ist auch unter großen Bildwinkeln nahezu stegfrei.

Ein 0,25 mm dickes Verbindungsmittel 9, das somit 0,05 mm dünner als die Höhe der Stufe in der Trägerscheibe 3 ist, verbindet die Trägerscheibe 5 an einem Bereich ihrer Umfassungsfläche 5c mit einem Bereich der Umfassungsfläche 3c der Lentikularscheibe und sorgt damit für eine mechanische Verbindung der Lentikularscheibe 3 zu der von dem Halteelement 7 gehaltenen Trägerscheibe 5. Gleichzeitig wird die dazwischen angeordnete Fresnelscheibe 4 in ihrer Lage fixiert. Das Verbindungsmittel 9 ist beispielsweise ein Klebestreifen, der mit seiner Klebefläche an den Umfassungsflächen 3c der Lentikularscheibe 3 und 5c der Trägerscheibe 5 anliegt. Der Klebestreifen dient in dem dargestellten Beispiel gleichzeitig auch als Befestigungsmittel 12 zwischen der Umfassungsfläche 5c der Trägerscheibe 5 und der Außenfläche 8c des Fixierungsteils 8 bzw. des Halteelements 7.

Mit der erfindungsgemäßen Ausbildung des Rückprojektionsmoduls 1 und des Projektionsschirms 2 ist es möglich, auch große Projektionsschirme 2 von beispielsweise 1.000 mm x 750 mm Fläche im wesentlichen stegfrei anzuordnen. Bei solch großen Scheiben sollte natürlich der thermischen Ausdehnung dadurch Rechnung getragen werden, daß ein seitlicher Mindestabstand der Projektionsschirme 2 eingehalten wird, da eine Temperaturänderung von 10 °C bereits eine Änderung der Flächendimensionen um etwa 1 mm zur Folge hat.

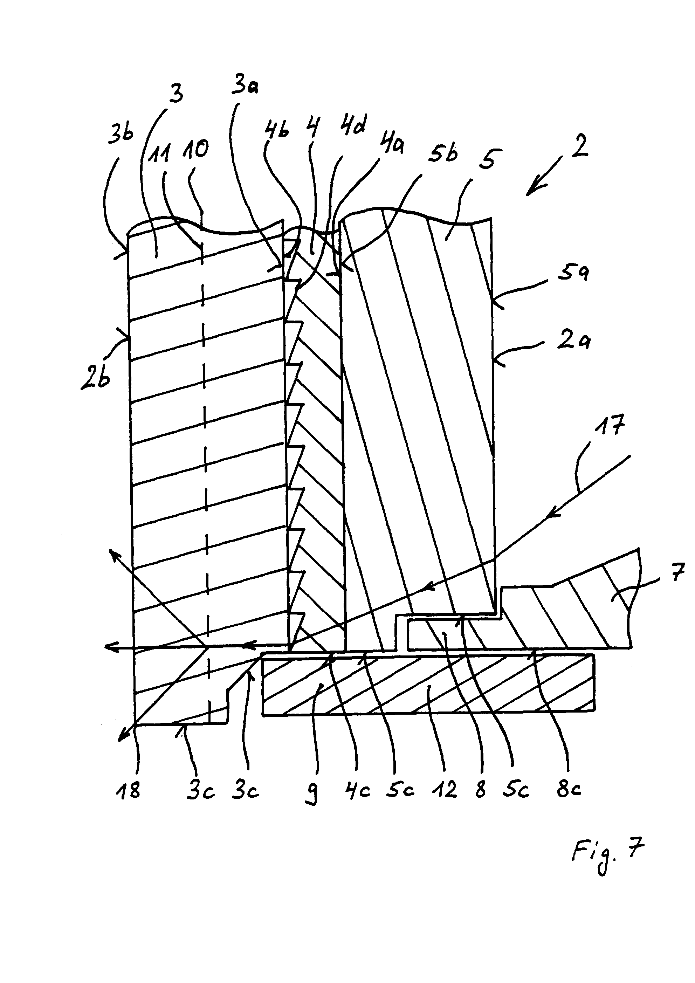

Die Figur 7 zeigt eine gegenüber Figur 6 abgewandelte Ausführung eines Projektionsschirms 2 mit Halteelement 7. Sie unterscheidet sich dadurch, daß die Umfassungsflächen 3c der Lentikularscheibe 3 und 5c der Trägerscheibe 5 anders ausgebildet sind. Die Umfassungsfläche 3c der Trägerscheibe 3 weist eine Anschrägung auf, die gegebenenfalls auch mittels geeigneter Verbindungstechniken mit dem Verbindungsmittel 9 verbunden sein kann. Auch hierbei ist die Umfassungsfläche 3c der Lentikularscheibe 3 so ausgebildet, daß das von den Streukörpern 11 gestreute Licht durch die Kante 18 am Rand und in den Ecken der Austrittsseite 2b des Projektionsschirms 2 austreten kann. Die Umfassungsfläche 5c der Trägerscheibe 5 ist in diesem Beispiel nicht keilförmig, sondern stufenförmig ausgebildet. Die Materialstärke und die Tragkraft des Fixierungsteils 8 sind demzufolge reduziert, können aber für viele Anwendungsfälle noch ausreichend sein. Auch hierbei wird die Lichtausbreitung des randnächsten Strahls 17 auf dem Weg von der Eintrittsfläche 5a der Trägerscheibe 5 zu dem Rand der Fresnelstruktur 4d nicht behindert.

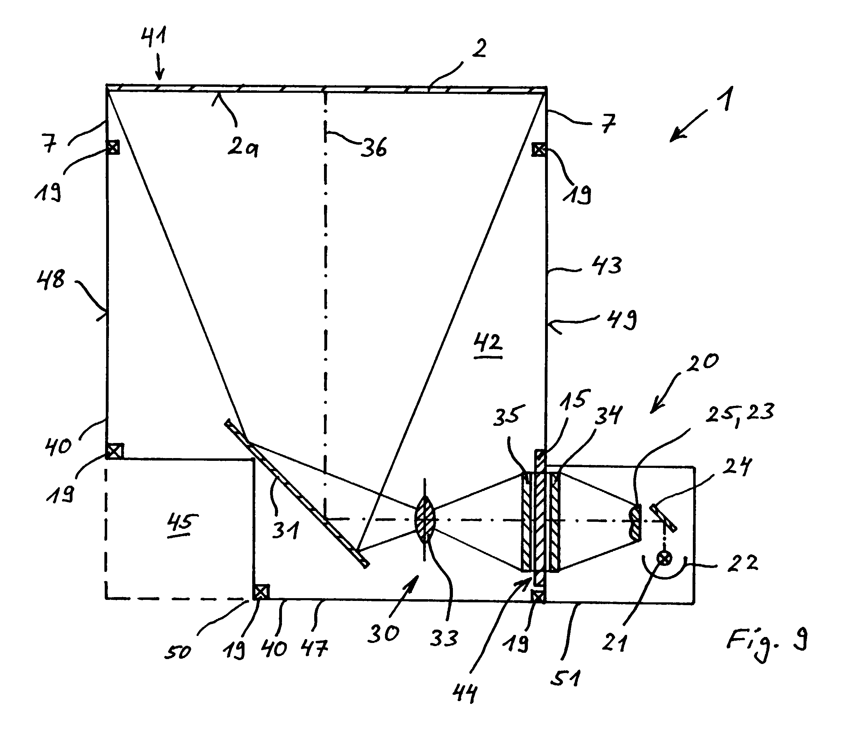

In Figur 8 ist eine Aufsicht auf die Austrittsfläche 3b zweier nebeneinander angeordneter Projektionsschirme 2 dargestellt, die zeigt, wie dicht die Bildpunkte 16 an den Rand bzw. die Kante 18 der Lentikularscheibe projiziert werden können. Der Randabstand D kann kleiner als 0,75 mm sein und auch Werte von 0,3 mm oder darunter erreichen.

In Figur 9 ist eine schematische Darstellung eines waagrechten Schnittes durch ein erfindungsgemäßes Rückprojektionsmodul 1 dargestellt. Der Projektionsschirm 2 wird mittels der Halteelemente 7 an einem Traggestell 19 befestigt. Der Projektionsschirm 2 ist auf der Stirnseite 41 eines Modulgehäuses 40 angeordnet, das die Lichteintrittsfläche 2a des Projektionsschirms 2 gegen Umgebungslicht abschirmt. Das Modulgehäuse 40 ist ebenfalls an dem Traggestell 19 befestigt. Im Innern 42 des Modulgehäuses 40 ist die Projektionseinrichtung 30 angeordnet. Sie umfaßt ein Projektionsobjektiv 33 und eine Fresnellinse 35. Das Projektionsobjektiv 33 hat eine Schnittweite von 1.200 mm bei einem Projektionsschirm 2 von 1.000 mm x 750 mm. Ferner ist ein Abbildungsumlenkspiegel 31 vorgesehen, mit dem die Einbautiefe des Rückprojektionsmoduls 1 reduziert wird, da die optische Achse 36 einen geknickten Verlauf aufweist.

Das Modulgehäuse 40 weist eine erste Seitenwand 48 und eine dieser gegenüberliegende zweite Seitenwand 49 auf. In einem Ausschnitt 44 der Wandfläche 43 der zweiten Seitenwand 49 ist der Durchlicht-Bildgeber 15 angeordnet. Die Beleuchtungseinrichtung 20 ist außerhalb des Modulgehäuses 40 angeordnet. Sie befindet sich in einem Lichtquellengehäuse 51 und umfaßt eine Lichtquelle 21, einen Reflektor 22, einen Beleuchtungsumlenkspiegel 24, einen als Freiform-Kondensorlinse 23 ausgebildeten Kondensor 25 mit einem Fresnel-Kondensor 34.

Das Modulgehäuse 40 ist in einem korrespondierenden Bereich 45, der für die Aufnahme eines an einem benachbarten Rückprojektionsmoduls 1 angesetzten Lichtquellengehäuses 51 vorgesehen ist, ausgespart. Die Aussparung befindet sich auf der Rückseite 47 des Modulgehäuses 40 an dem Übergang 50 zu der ersten Seitenwand 48. Auf diese Weise können die Rückprojektionsmodule 1 trotz einer geringen Einbautiefe stegfrei aneinandergereiht werden.

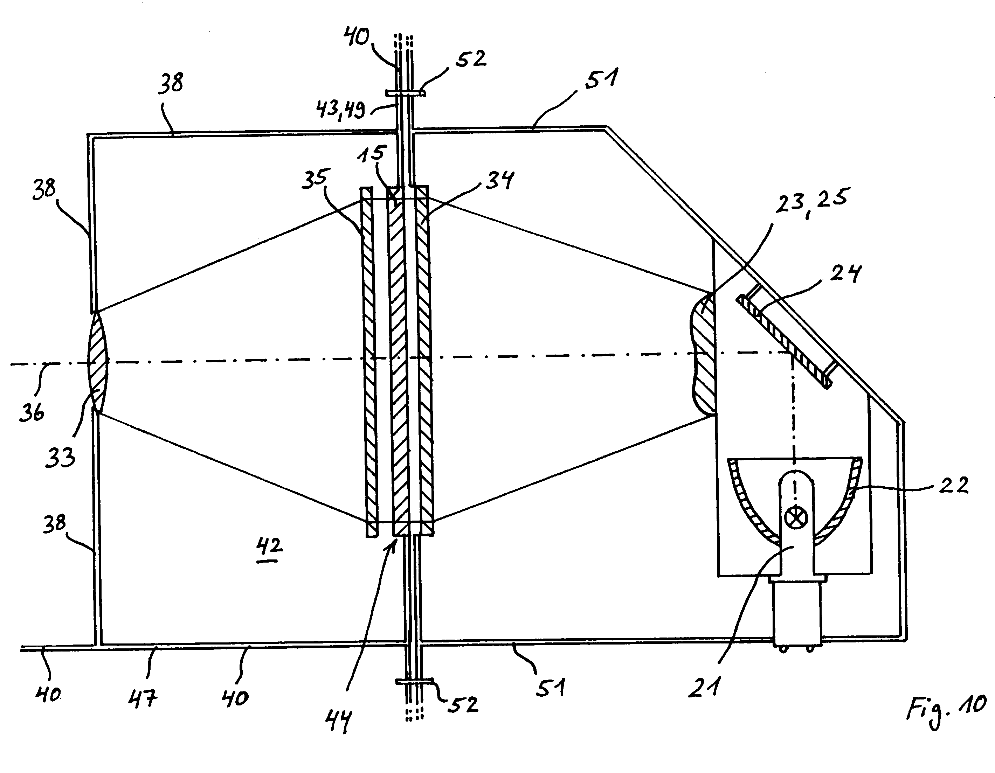

Die Figur 10 zeigt eine Einzelheit zu Figur 9 mit einem modifizierten Lichtquellengehäuse 51, das eine der Orientierung des Abbildungsumlenkspiegels 31 entsprechende Anschrägung aufweist. Das Projektionsobjektiv 33 wird im Innern 42 des Modulgehäuses 40 von der Objektivhalterung 38 gehalten. Der Durchlicht-Bildgeber 15 befindet sich genau in der Ebene der zweiten Seitenwand 49 in einem Ausschnitt 44. Das Lichtquellengehäuse 51 ist mittels schematisch dargestellter Befestigungselemente 52 auf der Außenseite des Modulgehäuses 40 abnehmbar angebracht. Der Fresnel-Kondensor 34 sorgt für eine zur optischen Achse 36 parallele Durchleuchtung des Durchlicht-Bildgebers 15 und die Fresnellinse 35 für die Bündelung des Lichts auf das Projektionsobjektiv 33. Durch den im Lichtquellengehäuse 51 angeordneten Beleuchtungsumlenkspiegel 24 ist die Lichtquelle 21 gut von der Rückseite nebeneinander angeordneter Rückprojektionsmodule zugänglich, so daß im Bedarfsfall ein leichter Lampenwechsel erfolgen kann.

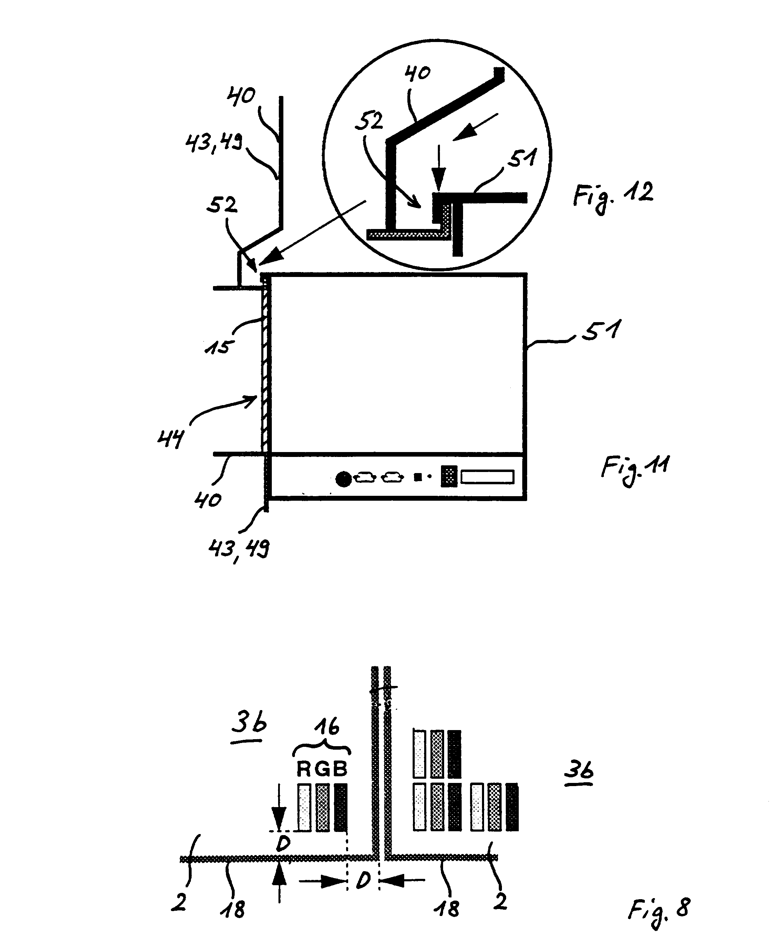

In Figur 11 ist eine schematische Rückansicht eines an dem Ausschnitt 44 des Modulgehäuses 40 angeordneten Lichtquellengehäuses 51 dargestellt. Es ist mittels des Befestigungselements 52 an der zweiten Seitenwand 49, in deren Wandfläche 43 der Durchlicht-Bildgeber 15 angeordnet ist, einhängbar.

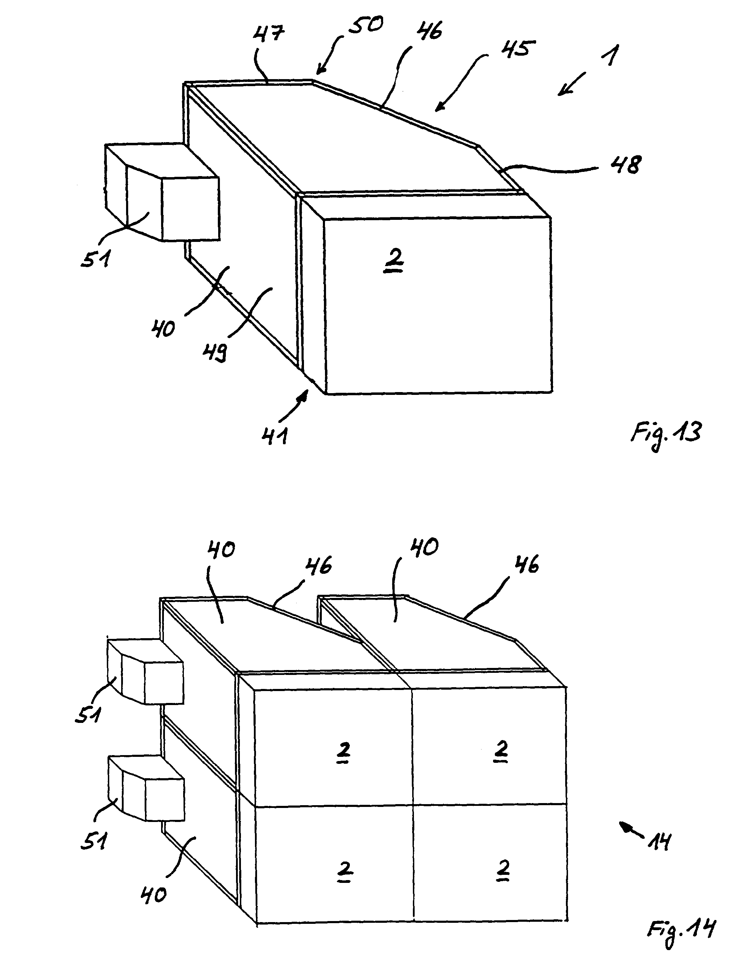

In Figur 12 ist in einer vergrößerten Darstellung das Befestigungselement 52 schematisch dargestellt. Es ist in Form zweier ineinander greifenden Haken ausgebildet, und der Bewegungsablauf während des Einsetzens des Lichtquellengehäuses 51 in das Befestigungselement 52 an dem Modulgehäuse 40 ist durch die Pfeile dargestellt.

Die Figur 13 zeigt eine perspektivische, schematische Ansicht eines erfindungsgemäßen Rückprojektionsmoduls 1. Das Rückprojektionsmodul 1 ist ein eigenständiges Projektionsgerät und umfaßt einen Projektionsschirm 2, der Abmessungen von 1.000 mm x 750 mm aufweist. Er ist an der Stirnseite 41 eines Modulgehäuses 40 angeordnet. Das Modulgehäuse 40 weist eine der Stirnseite gegenüberliegende Rückwand 47 sowie eine erste Seitenwand 48 und eine zweite Seitenwand 49 auf. An der zweiten Seitenwand 49 ist das Lichtquellengehäuse 51 angebracht. Die Rückwand 47 weist an dem Übergang 50 in einem korrespondierenden Bereich 45, der für die Aufnahme eines Lichtquellengehäuses 51 eines benachbarten Rückprojektionsmoduls 1 vorgesehen ist, eine Anschrägung 46 auf. Auf diese Weise können die Modulgehäuse 40 nebeneinander angeordneter Rückprojektionsmodule 1 sich gegenseitig durchdringend angeordnet werden, um eine geringe Bautiefe zu ermöglichen, auch wenn das Modulgehäuse 40 eine im wesentlichen quaterförmige Grundform hat.

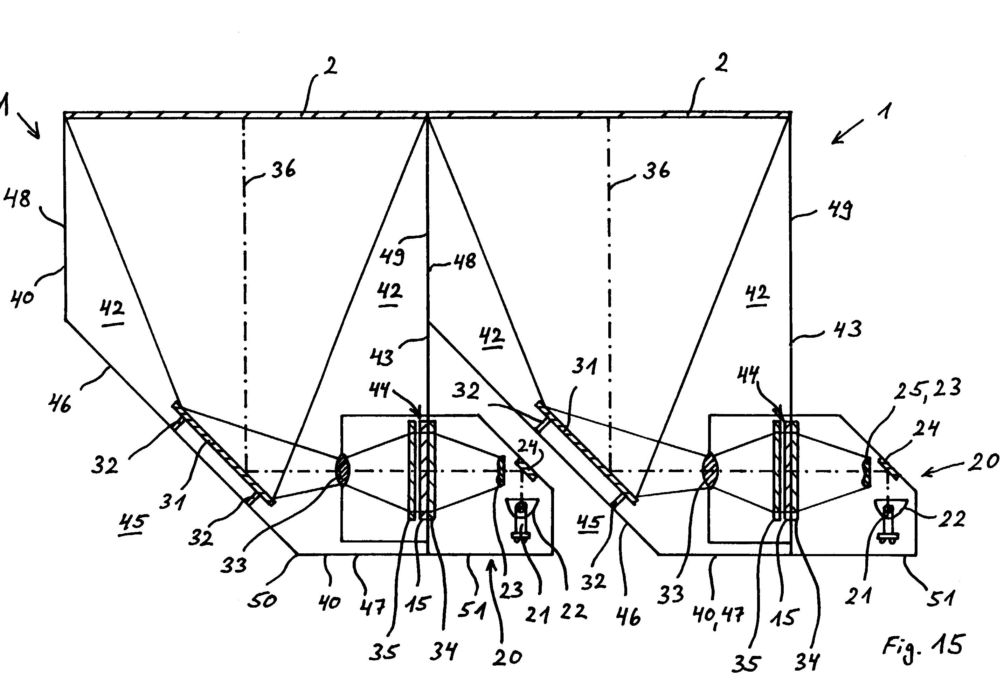

In Figur 14 ist dargestellt, wie vier solche erfindungsgemäßen Rückprojektionsmodule 1 in einer Matrixanordnung angeordnet werden können, wobei ein im wesentlichen stegfreier Anschluß der vier Teilbilder erzielt wird.

In Figur 15 ist ein schematischer Horizontalschnitt durch die Anordnung gemäß Figur 14 dargestellt. Man erkennt hierbei deutlich die Vorzüge der erfindungsgemäßen Ausbildung der Projektionsschirme 2 und der Modulgehäuse 40. Die Projektionsschirme 2 und die darauf projizierten Bilder schließen nahezu stegfrei aneinander an und die Einbautiefe der Rückprojektionsmodule 1 ist gering, wobei erforderliche Wartungsarbeiten an den Beleuchtungseinrichtungen 20 oder den Durchlicht-Bildgebern 15 leicht durchführbar sind. Ferner sind die Verstellelemente 32, mit denen die Abbildungsumlenkspiegel 31 befestigt sind, für Justagearbeiten leicht von der Rückseite der Rückprojektionsmodule 1 zu erreichen.

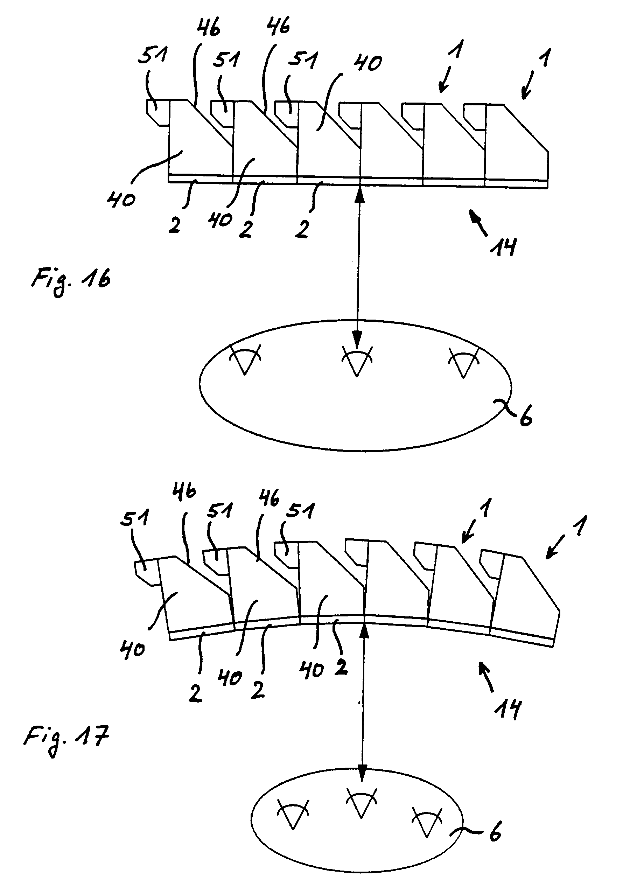

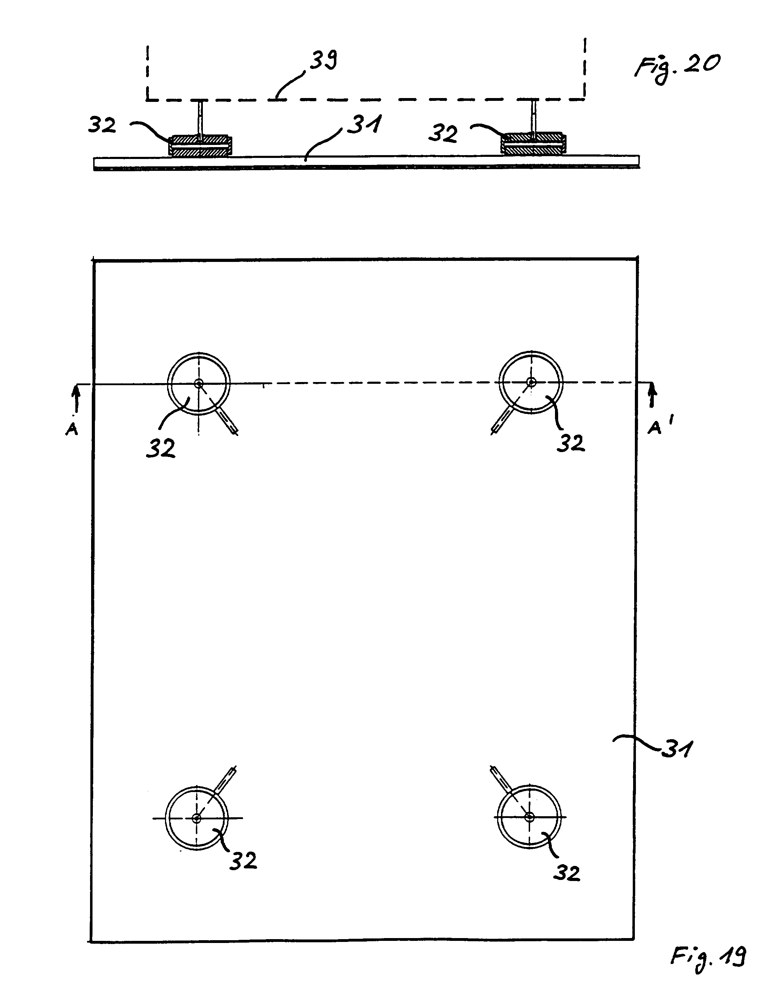

Die Figur 16 zeigt eine schematische Aufsicht auf linear nebeneinander angeordnete Rückprojektionsmodule 1, die auf einer Großbildwand 14 ein für Betrachter 6 im wesentlichen stegfreies, aus Teilbildern zusammengesetztes Gesamtbild anzeigen. In Figur 17 ist in Abwandlung hiervon eine polygonale Anordnung dargestellt.

Die Figur 18 zeigt eine schematische Matrixanordnung von sechs Rückprojektionsmodulen 1 mit der zugehörigen elektronischen Steuerung 53. Die elektronische Steuerung 53 zerlegt das eintreffende Bildsignal in sechs einzelne Bildsignale für die jeweiligen Rückprojektionsmodule 1. Vorteilhafterweise ist die elektronische Steuerung 53 so ausgebildet, daß anzuzeigende Objekte von einem Projektionsschirm 2 auf den anderen übergreifend darstellbar und verschiebbar sind. Durch den modularen Aufbau ist die Großbildwand 14 mit beliebig hoher Auflösung realisierbar.

In Figur 19 ist die Rückseite eines Abbildungumlenkspiegels 31 dargestellt. Dieser weist vier darauf angebrachte, in einem Rechteck angeordnete Verstellelemente 32 auf, mit denen der Spiegel 31 an einer Halterung befestigbar ist.

Die Figur 20 zeigt einen Schnitt entlang der Linie A - A' in Fig. 19. Die Spiegelhalterung 39 ist durch eine gestrichelte Linie angedeutet. Die Verstellelemente 32 sind unabhängig voneinander verstellbar, so daß der Abstand des Spiegels von der Spiegelhalterung 39 an den vier Punkten, an denen sich die Verstellelemente 32 befinden, veränderbar ist. Dadurch kann die Krümmung der Oberfläche des Spiegels 31 geringfügig verändert werden.

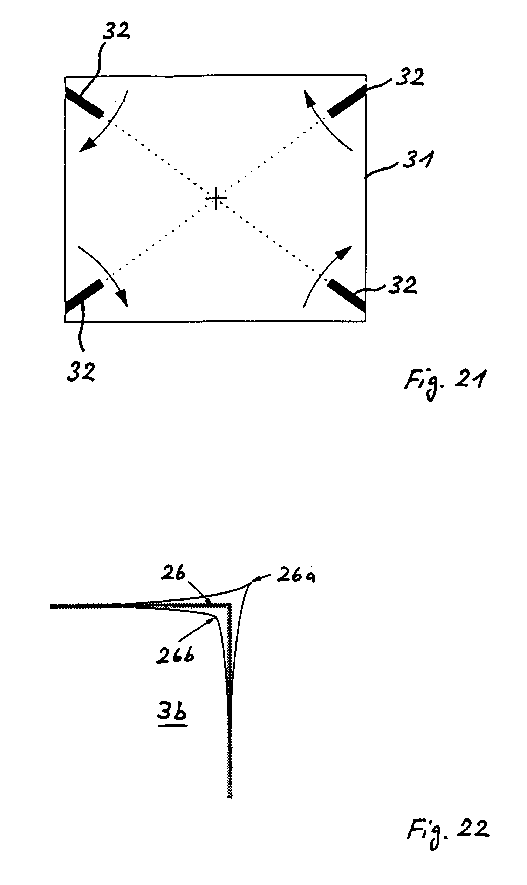

Der Verstellvorgang der Verstellelemente 32 ist in Figur 21, die eine Aufsicht auf die Rückseite des Abbildungsumlenkspiegels 31 zeigt, skizziert. Wenn die Verstellelemente 32 in Pfeilrichtung bzw. in entgegengesetzter Pfeilrichtung gedreht werden, ändert sich der Abstand zwischen Abbildungsumlenkspiegel 31 und Spiegelhalterung 39.

Der dabei bewirkte Effekt auf den Bildrand 26 ist in Figur 22 dargestellt, die eine Aufsicht auf den Eckbereich einer Austrittsfläche 3b der Lentikularscheibe 3 zeigt. Der Bildrand 26 eines projizierten Bildes zeigt die ideale Einstellung an. Beim Verdrehen der Verstellelemente 32 in Pfeilrichtung ergibt sich ein abweichender Verlauf 26a und beim Verstellen in entgegengesetzter Pfeilrichtung der abweichende Verlauf 26b. Auf diese Weise ist es möglich, den Spiegel derart zu verstellen, daß eine Korrektur von Verzeichnisfehlern möglich ist und ein idealer Bildrand 26 eingestellt werden kann.

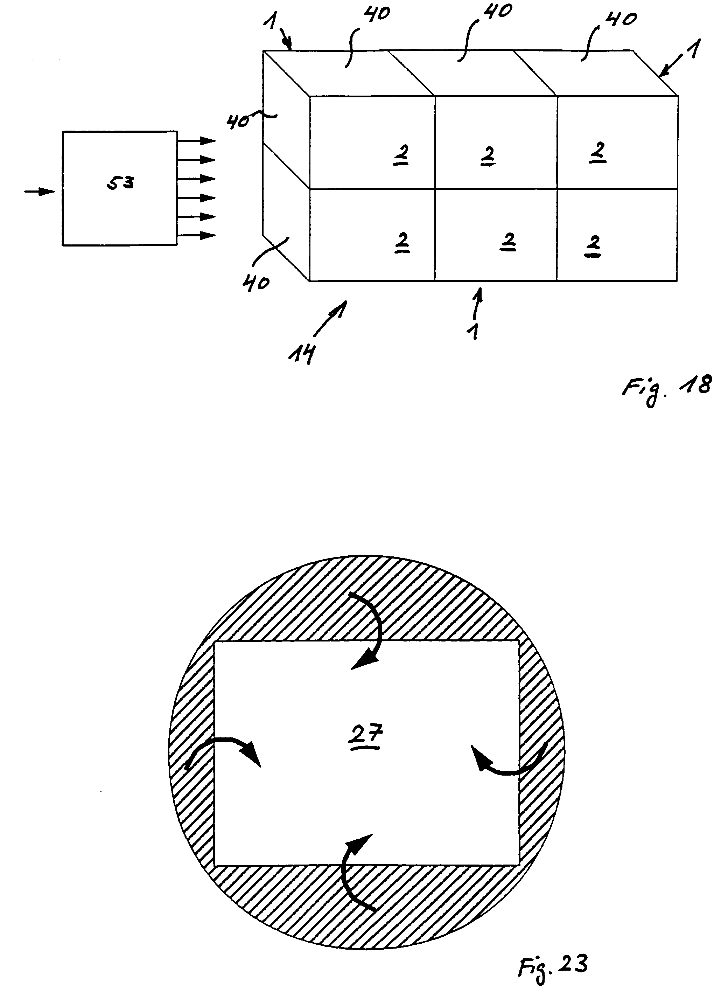

In Figur 23 ist dargestellt, wie eine Freiform-Kondensorlinse eine rotationssymmetrische Lichtverteilung in eine dem Objektformat 27 angepaßte Intensitätsverteilung transformieren kann. Hierzu werden Lichtanteile, die außerhalb des Objektformats 27 liegen, in der durch die Pfeile angedeuteten Weise auf das Objektformat 27 abgebildet. Dadurch kann eine erhebliche Steigerung der Lichtintensität erreicht werden. Dabei kann die Freiform-Kondensorlinse entweder eine gleichmäßige Intensitätsverteilung in dem Objektformat erzeugen, sie kann aber auch dazu dienen, die Intensitätsverteilung im Objektformat von der Mitte zum Rand hin zunehmend auszubilden, um dadurch den durch andere optische Komponenten bedingten Intensitätsabfall zum Rand hin zu kompensieren.

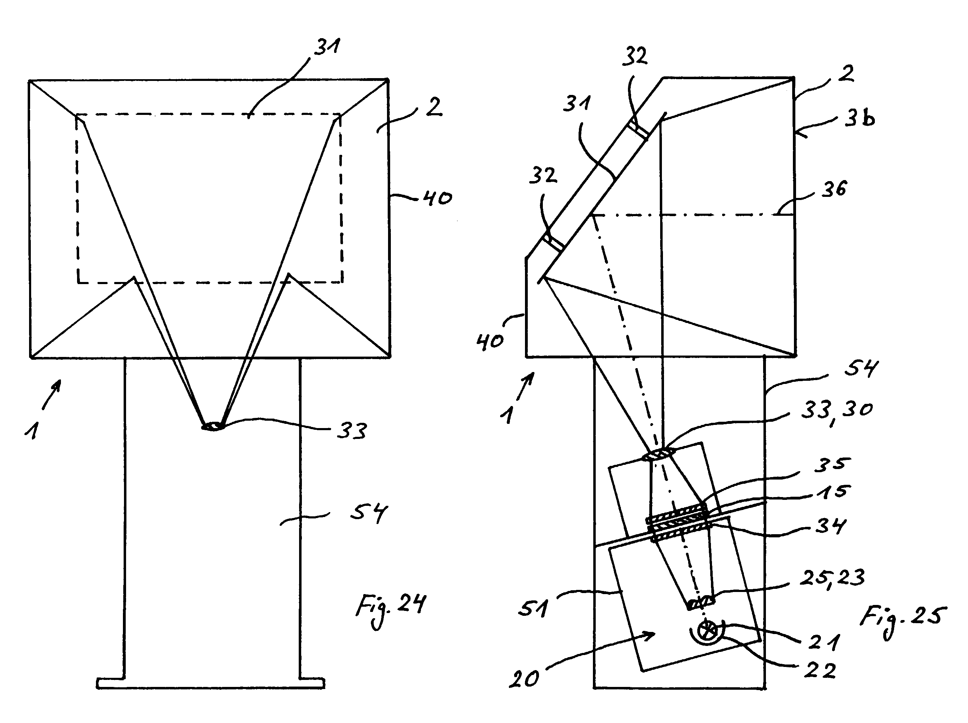

Die Figuren 24 und 25 zeigen eine abgewandelte Ausbildung eines erfindungsgemäßen Rückprojektionsmoduls 1, die dann von Vorteil ist, wenn der Projektionsschirm 2 nicht mit weiteren Projektionsschirmen 2 aneinandergereiht werden soll. Es weist einen Standfuß 54 auf, in dem die Projektionseinrichtung 30 und die Beleuchtungseinrichtung 20 angeordnet sind. Die Beleuchtungseinrichtung 20 ist auch hier in einem Lichtquellengehäuse 51 angebracht, das abnehmbar an der den Durchlicht-Bildgeber 15 umgebenden Wand angesetzt ist.

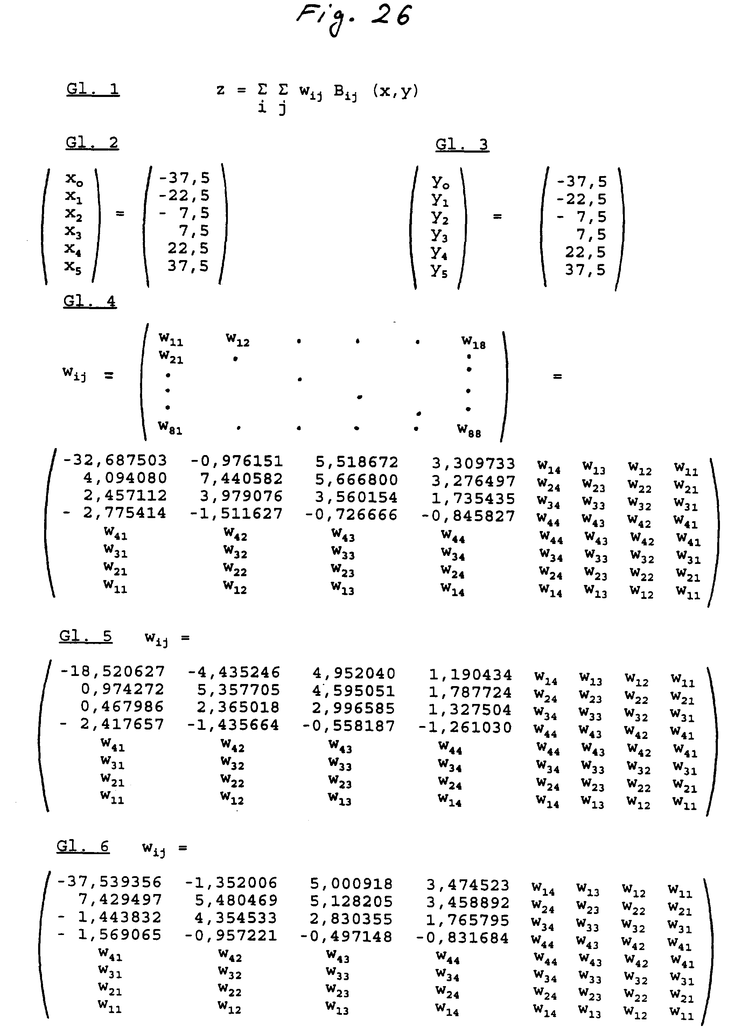

Die Figur 26 zeigt verschiedene Gleichungen zu einer Freiform-Kondensorlinse, die im Rahmen der Erfindung für ein Rückprojektionsmodul entwickelt wurde, dessen Projektionsschirm Abmessungen von 1.000 mm x 750 mm aufweist, wobei eine Durchlicht-Flüssigkristall-Anzeigevorrichtung mit 10,4 Zoll für die Diagonale verwendet wurde. Bei den Flächen der Freiform-Kondensorlinse handelt es sich um sogenannte B-Spline-Funktionen der nichtparametrisierten Form gemäß Gleichung 1. Dabei sind die wᵢⱼ die in den Gleichungen 4-6 tabellierten Wichtungsfaktoren, welche die spezielle Oberflächengeometrie einzelner Linsen entsprechend den Anforderungen an die lichttechnischen Spezifikationen charakterisieren, und die Bᵢⱼ sind die B-Spline-Basisfunktionen.

Dabei sind x, y und z die Koordinaten in einem kartesischen Koordinatensystem. Die z-Achse entspricht der optischen Achse. Die x-Achse ist parallel zur langen Kante der Durchlicht-Flüssigkristall-Anzeigevorrichtung, die y-Achse ist senkrecht zur langen Kante angeordnet. Grundlagen zur Theorie von Splinefunktionen und insbesondere ein Algorithmus zur Berechnung von B-Spline-Basisfunktionen, der im Rahmen der Erfindung angewandt würde, sind in dem Buch "An Introduction to Splines for Use in Computer Graphics and geometric Modeling"; R.H. Bartels, J.C. Beatty, B.A. Barsky, Morgan Kaufmann Publishers Inc., Los Altos, California, 1987, dargestellt. Die in diesem Buch im speziellen behandelten zweidimensionalen Anwendungen lassen sich auf dreidimensionale Anwendungen verallgemeinern. Die B-Spline-Basisfunktionen sind Abschnitte von Polynomen dritten Grades, die mittels einer Rekursionsvorschrift erzeugt werden.

Die Knotenvektoren gemäß Gleichungen 2 und 3 sind Grundlage für die Berechnung der abschnittsweise definierten B-Spline-Basisfunktionen und hängen mit der Festlegung der Definitionsbereiche dieser abschnittsweise definierten B-Spline-Basisfunktionen zusammen. Die Zahl der Komponenten der Knotenvektoren wird durch die zur Verfügung stehende Rechenleistung beschränkt. Zur Vereinfachung des Problems ist es vorteilhaft, wenn die Differenzen der Komponenten der Knotenvektoren gleich sind, die Komponenten also äquidistant angeordnet sind. Für ein Projektionsobjektiv mit ca. 80 mm Durchmesser haben sich die Knotenvektoren gemäß Gleichungen 2 und 3 als vorteilhaft herausgestellt.

Die Zahl der Wichtungsfaktoren wᵢⱼ muß aus Gründen der Rechenleistung begrenzt werden. Ferner ist es auch im Hinblick auf die erreichbare Fertigungsgenauigkeit nicht zweckmäßig eine allzu große Anzahl zu berechnen. Im Rahmen der Erfindung hat es sich als vorteilhaft herausgestellt, wenn i = j = 8 gilt. Da sich das optische Problem auf vier Quadranten reduzieren läßt, die spiegelsymmetrisch zueinander liegen, ist es ausreichend, eine 4 x 4-Untermatrix der 8 x 8-Matrix zu berechnen. Bei der Berechnung werden alle optischen Komponenten, insbesondere die Lichtquelle, der Reflektor und das Projektionsobjektiv berücksichtigt und bei der Lösung des zugrunde gelegten lichttechnischen Problems mit ihren modellhaft berücksichtigten Eigenschaften mitgerechnet. Die Gleichungen 4, 5 und 6 geben drei verschiedene Varianten an, die vorteilhafte Lösungen zur Erzielung einer gleichmäßigen Helligkeit des projizierten Bildes auf dem Projektionsschirm darstellen.

### Bezugszeichenliste

- 1: Rückprojektionsmodul
- 2: Projektionsschirm
- 2a: Eintrittsfläche zu 2
- 2b: Austrittsfläche zu 2
- 3: Lentikularscheibe
- 3a: Eintrittsfläche zu 3
- 3b: Austrittsfläche zu 3
- 3c: Umfassungsfläche zu 3
- 4: Fresnelscheibe
- 4a: Eintrittsfläche zu 4
- 4b: Austrittsfläche zu 4
- 4c: Umfassungsfläche zu 4
- 4d: Fresnelstruktur
- 5: Trägerscheibe
- 5a: Eintrittsfläche zu 5
- 5b: Austrittsfläche zu 5
- 5c: Umfassungsfläche zu 5
- 6: Betrachter
- 7: Halteelement
- 8: Fixierungsteil
- 8c: Außenfläche zu 8 8
- 9: Verbindungsmittel
- 10: Bildebene
- 11: Streukörper
- 12: Befestigungsmittel
- 13: Steg
- 14: Großbildwand
- 15: Durchlicht-Bildgeber
- 16: Bildpunkt
- 17: Strahl
- 18: Kante
- 19: Traggestell
- 20: Beleuchtungseinrichtung
- 21: Lichtquelle
- 22: Reflektor
- 23: Freiform-Kondensorlinse
- 24: Beleuchtungsumlenkspiegel
- 25: Kondensor
- 26: Bildrand
- 27: Objektformat
- 30: Projektionseinrichtung
- 31: Abbildungsumlenkspiegel
- 32: Verstellelement
- 33: Projektionsobjektiv
- 34: Fresnel-Kondensor
- 35: Fresnellinse
- 36: optische Achse
- 37: Projektionsapparat
- 38: Objektivhalterung
- 39: Spiegelhalterung
- 40: Modulgehäuse
- 41: Stirnseite
- 42: Innenraum
- 43: Wandfläche
- 44: Ausschnitt
- 45: korrespondierender Bereich
- 46: Anschrägung
- 47: Rückwand
- 48: erste Seitenwand
- 49: zweite Seitenwand
- 50: Übergang
- 51: Lichtquellengehäuse
- 52: Befestigungselement
- 53: elektronische Steuerung
- 54: Standfuß

- D: Randabstand
- A: Abstand

## Patentansprüche

1. Großflächiger Projektionsschirm (2) zum Anzeigen eines Bildes mit einem Rückprojektionsmodul, das
- einen Durchlicht-Bildgeber (15) zum Darstellen des Bildes in einem verkleinerten Maßstab,
- eine Beleuchtungseinrichtung (20) zum Durchleuchten des Durchlicht-Bildgebers (15) und
- eine Projektionseinrichtung (30) zum vergrößerten Abbilden des von dem Durchlicht-Bildgeber (15) dargestellten Bildes auf den Projektionsschirm (2) umfaßt,
- wobei der Projektionsschirm (2) eine Lentikularscheibe (3) und eine Trägerscheibe (5), die jeweils eine der Projektionseinrichtung (30) zugewandte lichteintrittsseitige Fläche (3a,5a), eine dieser gegenüberliegende lichtaustrittsseitige Fläche (3b,5b) und eine die Eintritts- mit der Austrittsfläche verbindende Umfassungsfläche (3c,5c) haben, und eine zwischen seiner Eintrittsfläche (2a) und seiner Austrittsfläche (2b) angeordnete Fresnelstruktur (4d) aufweist,
**dadurch gekennzeichnet**, daß
- die Flächendimensionen der Lentikularscheibe (3) und der Trägerscheibe (5) jeweils auf der lichteintrittsseitigen (3a,5a) Fläche umfangsverteilt kleiner als auf der lichtaustrittsseitigen Fläche (3b,5b) sind, wobei die Flächendimensionen der lichteintrittsseitigen Fläche (3a) der Lentikularscheibe (3) und der lichtaustrittsseitigen Fläche (5b) der Trägerscheibe (5) denen der dazwischen angeordneten Fresnelstruktur (4d) entsprechen,
- die Trägerscheibe (5) so ausgebildet ist, daß sie an ihrer Umfassungsfläche (5c) von einem Halteelement (7) gehalten werden kann, dessen als Fixierungsteil (8) dienender, in Ausbreitungsrichtung des projizierten Lichtes am Ende des Halteelementes (7) gelegener Teilabschnitt die Trägerscheibe (5) an einem Bereich ihrer Umfassungsfläche (5c) umfangsverteilt mindestens abschnittsweise umfaßt, und daß
- ein Bereich der Umfassungsfläche (3c) der Lentikularscheibe (3) mit einem Bereich der Umfassungsfläche (5c) der Trägerscheibe (5) und/oder einem Bereich der Außenfläche (8c) des Fixierungsteils (8) mittels eines umfangsverteilt zumindest abschnittsweise angeordneten Verbindungsmittels (9) verbindbar ist,
- wobei die äußeren Dimensionen des Fixierungsteils (8) und des Verbindungsmittels (9) die Flächendimensionen der lichtaustrittsseitigen Fläche (3b) der Lentikularscheibe (3) um nicht mehr als den Abstand A benachbarter Bildpunkte (16) auf der Lentikularscheibe (3) überschreiten.

2. Projektionsschirm (2) nach Anspruch 1, **dadurch gekennzeichnet**, daß die Flächendimensionen der lichtaustrittsseitigen Fläche (3b) der Lentikularscheibe (3) weniger als 2 mm, bevorzugt weniger als 1 mm größer als die der lichteeintrittsseitigen Fläche (3a) sind.

3. Projektionsschirm (2) nach einem der vorhergehenden Ansprüche, **dadurch gekennzeichnet**, daß die Umfassungsfläche (3c) der Lentikularscheibe (3) derart ausgebildet ist, daß das Licht eines randnächsten Bildpunktes (16) der in der Lentikularscheibe (3) gelegenen Bildebene (10) des projizierten Bildes von dem Verbindungsmittel (9) ungehindert durch den Rand der lichtaustrittsseitigen Fläche (3b) der Lentikularscheibe (3) austreten kann.

4. Projektionsschirm (2) nach einem der vorhergehenden Ansprüche, **dadurch gekennzeichnet**, daß die Umfassungsfläche (3c,5c) der Lentikularscheibe (3) oder der Trägerscheibe (5) stufen- oder treppenförmig ausgebildet ist.

5. Projektionsschirm (2) nach einem der vorhergehenden Ansprüche, **dadurch gekennzeichnet,** daß die Fresnelstruktur (4d) auf einer Fresnelscheibe (4) ausgebildet ist, die zwischen der Trägerscheibe (5) und der Lentikularscheibe (3) angeordnet ist.

6. Projektionsschirm (2) nach Anspruch 5, **dadurch gekennzeichnet**, daß die Fresnelstruktur (4d) auf der lichtaustrittsseitigen Fläche (4b) der Fresnelscheibe (4) ausgebildet ist.

7. Projektionsschirm (2) nach Anspruch 6, **dadurch gekennzeichnet**, daß die lichteintrittsseitige Fläche (4a) der Fresnelscheibe (4) mit der lichtaustrittsseitigen Fläche (5b) der Trägerscheibe (5) fest verbunden ist.

8. Projektionsschirm (2) nach Anspruch 6, **dadurch gekennzeichnet**, daß die lichteintrittsseitige Fläche (4a) der Fresnelscheibe (4) an der lichtaustrittsseitigen Fläche (5b) der Trägerscheibe (5) anliegt.

9. Projektionsschirm (2) nach Anspruch 6, **dadurch gekennzeichnet**, daß die lichteintrittsseitige Fläche (4a) der Fresnelscheibe (4) durch einen Spalt von der lichtaustrittsseitigen Fläche (5b) der Trägerscheibe beabstandet ist.

10. Projektionsschirm (2) nach Anspruch 9, **dadurch gekennzeichnet**, daß die Breite des Spaltes kleiner als 0,5 mm, bevorzugt kleiner als 0,3 mm ist.

11. Projektionsschirm (2) nach einem der Ansprüche 5 bis 10, **dadurch gekennzeichnet**, daß mindestens ein die Einhaltung eines geringen Flächenabstandes sicherndes Abstandselement zwischen der lichtaustrittsseitigen Fläche (5b) der Trägerscheibe (5) und der lichteintrittsseitigen Fläche (4a) der Fresnelscheibe (4) angeordnet ist.

12. Projektionsschirm (2) nach Anspruch 11, **dadurch gekennzeichnet**, daß das Abstandselement eine Mehrzahl an Stiften umfaßt.

13. Projektionsschirm (2) nach Anspruch 11, **dadurch gekennzeichnet**, daß das Abstandselement eine gewebeoder gazeartige Struktur umfaßt.

14. Projektionsschirm (2) nach einem der Ansprüche 5 bis 13, **dadurch gekennzeichnet**, daß die Fresnelscheibe (4) eine Fresnelfolie mit einer Dicke von weniger als 1,0 mm, bevorzugt weniger als 0,5 mm, besonders bevorzugt weniger als 0,3 mm ist.

15. Projektionsschirm (2) nach einem der vorhergehenden Ansprüche, **dadurch gekennzeichnet**, daß die Lentikularscheibe (3) auf der lichteintritts- (3a) und der lichtaustrittsseitigen (3b) Fläche flächig kaschiert ist.

16. Projektionsschirm (2) nach einem der vorhergehenden Ansprüche, **dadurch gekennzeichnet,** daß die Trägerscheibe (5) auf der lichteintritts- (5a) und der lichtaustrittsseitigen (5b) Fläche flächig kaschiert ist.

17. Projektionsschirm (2) nach einem der Ansprüche 1 bis 16, **dadurch gekennzeichnet**, daß er ein Fixierungsteil (8) aufweist, wobei die äußeren Dimensionen des Fixierungsteils (8) und des Verbindungsmittels (9) nicht größer als die Flächendimensionen der lichtaustrittsseitigen Fläche (3b) der Lentikularscheibe (3) sind.

18. Projektionsschirm (2) nach Anspruch 17, **dadurch gekennzeichnet**, daß das die Umfassungsfläche (5c) der Trägerscheibe (5) einfassende Fixierungsteil (8) keilförmig ausgebildet ist.

19. Projektionsschirm (2) nach Anspruch 17 oder 18, **dadurch gekennzeichnet**, daß ein Bereich der Umfassungsfläche (5c) der Trägerscheibe (5) mittels eines umfangsverteilt mindestens abschnittsweise angeordneten Befestigungsmittels (12) mit dem Fixierungsteil (8) verbunden ist.

20. Projektionsschirm (2) nach Anspruch 19, **dadurch gekennzeichnet**, daß das Verbindungsmittel (9) auch Befestigungsmittel (12) ist.

21. Projektionsschirm (2) nach einem der Ansprüche 1 bis 20, **dadurch gekennzeichnet**, daß das Verbindungsmittel (9) und/oder das Befestigungsmittel (12) als Klebestreifen ausgebildet ist.

22. Rückprojektionsmodul zum Anzeigen eines Bildes auf einem großflächigen Projektionsschirm (2), umfassend
- einen Durchlicht-Bildgeber (15) zum Darstellen des Bildes in einem verkleinerten Maßstab,
- eine Beleuchtungseinrichtung (20) zum Durchleuchten des Durchlicht-Bildgebers (15),
- einen Projektionsschirm (2), und
- eine Projektionseinrichtung (30) zum vergrößerten Abbilden des von dem Durchlicht-Bildgeber (15) dargestellten Bildes auf den Projektionsschirm (2),
**dadurch gekennzeichnet,** daß
der Projektionsschirm (2) nach einem der Ansprüche 1 bis 21 ausgebildet ist.

23. Rückprojektionsmodul nach Anspruch 22,
**dadurch gekennzeichnet,** daß
- ein die Lichteintrittsfläche (2a) des Projektionsschirms (2) gegen Umgebungslicht abschirmendes Modulgehäuse (40) vorgesehen ist, an dessen Stirnseite (41) der Projektionsschirm (2) angeordnet ist,
- die Projektionseinrichtung (30) in dem Innenraum (42) des Modulgehäuses (40) angeordnet ist,
- der Durchlicht-Bildgeber (15) in einem Ausschnitt (44) in einer Wandfläche (43) des Modulgehäuses (40) angeordnet ist,
- die Beleuchtungseinrichtung (20) außerhalb des Modulgehäuses (40) in einem Lichtquellengehäuse (51) angeordnet ist, das an dem Ausschnitt (44) des Modulgehäuses (40) abnehmbar so auf das Modulgehäuse (40) ansetzbar ist, daß es aus der Wandfläche (43) des Modulgehäuses (40) hervorsteht.

24. Rückprojektionsmodul nach Anspruch 23, **dadurch gekennzeichnet**, daß das Modulgehäuse (40) in einem korrespondierenden Bereich (45), der für ein an einem benachbarten Rückprojektionsmodul (1) angesetztes Lichtquellengehäuse (51) vorgesehen ist, eine von seiner Außenseite her zugängliche Anschrägung (46), Öffnung oder Aussparung aufweist, die so ausgebildet ist, daß das Lichtquellengehäuse (51) des benachbarten Rückprojektionsmoduls (1) in dem korrespondierenden Bereich (45) anordbar ist.

25. Rückprojektionsmodul nach Anspruch 24, **dadurch gekennzeichnet**, daß das Modulgehäuse (40) eine Rückwand (47) aufweist, die der Stirnseite (41) gegenüberliegend angeordnet ist, und mindestens zwei sich gegenüberliegende, die Stirnseite (41) mit der Rückwand (47) verbindende Seitenwände (48,49), wobei die Rückwand (47) an dem Übergang (50) zu der ersten Seitenwand (48) die Anschrägung (46), Öffnung oder Aussparung aufweist, und in der zweiten Seitenwand (49) der Ausschnitt (44) für den Durchlicht-Bildgeber (15) angeordnet ist.

26. Rückprojektionsmodul nach Anspruch 25, **dadurch gekennzeichnet**, daß sich die Anschrägung (46), Öffnung oder Aussparung in senkrechter Richtung über die Rückwand (47) und die erste Seitenwand (48) erstreckt.

27. Rückprojektionsmodul nach einem der Ansprüche 23 bis 26, **dadurch gekennzeichnet**, daß in dem Lichtquellengehäuse (51) ein Beleuchtungsumlenkspiegel (24) angeordnet ist und die Lichtquelle (21) der Beleuchtungseinrichtung (20) von der Rückseite des Rückprojektionsmoduls (1) zugänglich ist.

28. Rückprojektionsmodul nach Anspruch 22,
**dadurch gekennzeichnet**, daß
zwischen der Projektionseinrichtung (30) und dem Projektionsschirm (2) im Abbildungsgang mindestens ein Abbildungsumlenkspiegel (31) angeordnet ist, wobei mindestens ein Abbildungsumlenkspiegel (31) auf seiner Rückseite mehrere, flächig verteilte, einzeln längenveränderlich verstellbare Verstellelemente (32) aufweist, mit denen die Spiegeloberfläche des Abbildungsumlenkspiegels (31) in ihrer Krümmung geringfügig veränderbar ist.

29. Rückprojektionsmodul nach Anspruch 28, **dadurch gekennzeichnet,** daß vier Verstellelemente (32) vorgesehen sind.

30. Rückprojektionsmodul nach Anspruch 29, **dadurch gekennzeichnet**, daß die Verstellelemente (32) in den Eckpunkten eines Rechtecks angeordnet sind.

31. Rückprojektionsmodul nach einem der Ansprüche 28 bis 30, **dadurch gekennzeichnet**, daß zwischen dem Durchlicht-Bildgeber (15) und dem Projektionsschirm (2) nur ein Abbildungsumlenkspiegel (31) angeordnet ist und der Abbildungsumlenkspiegel (31) im wesentlichen senkrecht orientiert ist.

32. Rückprojektionsmodul nach Anspruch 22,
**dadurch gekennzeichnet,** daß
die Projektionseinrichtung (30) ein Projektionsobjektiv (33) aufweist mit einer Schnittweite, die in einem Bereich von 10 % kleiner bis 10 % größer als die Bilddiagonale des Projektionsschirms (2) liegt.

33. Rückprojektionsmodul nach Anspruch 32, **dadurch gekennzeichnet**, daß das Projektionsobjektiv (33) ein Objektiv mit nahezu fester Brennweite ist, die um mehr als 0,01 %, aber weniger als 0,5 % veränderlich einstellbar ist.

34. Projektionsapparat zum Projizieren eines Bildes auf einen großflächigen Projektionsschirm, umfassend
- einen Durchlicht-Bildgeber (15) zum Darstellen des Bildes in einem verkleinerten Maßstab,
- eine Beleuchtungseinrichtung (20) zum Durchleuchten des Durchlicht-Bildgebers (15),
wobei die Beleuchtungseinrichtung (20) eine Lichtquelle (21), einen Reflektor (22) und einen Kondensor (25) zur Ausleuchtung des Durchlicht-Bildgebers (15) aufweist,
- einen Projektionsschirm (2) und
- eine Projektionseinrichtung (30) zum vergrößerten Abbilden des von dem Durchlicht-Bildgeber (15) dargestellten Bildes auf den Projektionsschirm,
**dadurch gekennzeichnet**, daß
der Projektionsschirm (2) nach einem der Ansprüche 1 bis 21 ausgebildet ist, und daß der Kondensor (25) eine nicht rotationssymmetrische Freiform-Kondensorlinse (23) umfaßt.

35. Projektionsapparat nach Anspruch 34, **dadurch gekennzeichnet**, daß die Freiform-Kondensorlinse (23) vier spiegelsymmetrisch zueinander angeordnete Quadranten aufweist.

36. Projektionsapparat nach Anspruch 34 oder 35, **dadurch gekennzeichnet**, daß der Reflektor (22) eine zur optischen Achse rotationssymmetrische, elliptisch gekrümmte Oberfläche aufweist.

37. Projektionsapparat nach einem der Ansprüche 34 bis 36, **dadurch gekennzeichnet**, daß die Freiform-Kondensorlinse (23) so ausgebildet ist, daß die von dem Reflektor (22) erzeugte Lichtverteilung mittels der Freiform-Kondensorlinse (23) in eine dem rechteckigen Format des Bildes angepaßte Lichtverteilung umgewandelt wird.

38. Projektionsapparat nach einem der Ansprüche 34 bis 37, **dadurch gekennzeichnet**, daß die Freiform-Kondensorline (23) so ausgebildet ist, daß der Abfall der Lichtintensität zum Rand des Bildes zumindest teilweise kompensiert wird.

39. Projektionsapparat nach Anspruch 38, **dadurch gekennzeichnet**, daß die Freiform-Kondensorlinse (23) so ausgebildet ist, daß die Beleuchtungsstärke des projizierten Bildes um weniger als 25 %, bevorzugt weniger als 15 % von einem mittleren Wert abweicht.

40. Projektionsapparat nach einem der Ansprüche 34 bis 39, oder Rückprojektionsmodul nach Anspruch 22, 23, 28 oder 32,
**dadurch gekennzeichnet**, daß die Projektionseinrichtung (30) eine auf der Lichtaustrittsseite des Durchlicht-Bildgebers (15) angeordnete Fresnellinse (35) umfaßt.

41. Projektionsapparat oder Rückprojektionsmodul nach Anspruch 40, **dadurch gekennzeichnet,** daß die Fresnelstruktur der Fresnellinse (35) auf der dem Durchlicht-Bildgeber (38) zugewandten Seite angeordnet ist.

42. Projektionsapparat oder Rückprojektionsmodul nach Anspruch 40, **dadurch gekennzeichnet,** daß der Kondensor (25) einen Fresnel-Kondensor (34) umfaßt.

43. Projektionsapparat nach einem der Ansprüche 34 bis 39 oder Rückprojektionsmodul nach einem der Ansprüche 22,23,28 oder 32
**dadurch gekennzeichnet,** daß die Projektionseinrichtung (30) eine auf der Lichtaustrittsseite des Durchlicht-Bildgebers (15) angeordnete Fresnellinse (35) umfaßt, die Fresnelstruktur der Fresnellinse (35) auf der dem Durchlicht-Bildgeber (38) zugewandten Seite angeordnet ist, der Kondensor (25) einen Fresnel-Kondensor (34) umfaßt und die Fresnelstruktur des Fresnel-Kondensors (34) auf der dem Durchlicht-Bildgeber zugewandten Seite angeordnet ist.

## Claims

1. Large-area projection screen (2) for displaying an image with a rear projection module, comprising
- a light transmissive picture generator (15) for displaying the image on a reduced scale,
- an illumination unit (20) for the transillumination of the light transmissive picture generator (15) and
- a projection unit (30) for the enlarged imaging onto the projection screen (2) of the image depicted by the light transmissive picture generator (15),
- in which the projection screen (2) comprises a lenticular sheet (3) and a support sheet (5), each of which has a light-input-side face (3a, 5a) facing the projection unit (30), a light-output-side face (3b, 5b) lying opposite the latter and a peripheral surface (3c, 5c) connecting the input face to the output face, and a Fresnel structure (4d) disposed between its input face (2a) and its output face (2b),
**characterized in that**
- the surface dimensions of the lenticular sheet (3) and of the support sheet (5) each are arranged peripherally distributed smaller on the light-input-side (3a, 5a) face than on the light-output-side face (3b, 5b), wherein the surface dimensions of the light-input-side face (3a) of the lenticular sheet (3) and of the light-output-side face (5b) of the support sheet (5) correspond to those of the Fresnel structure (4d) disposed between them,
- the support sheet (5) is so constructed that it can be supported on its peripheral surface (5c) by a support element (7) whose partial section serving as a fixing part (8) and situated in the propagation direction of the projected light at the end of the support element (7) clasps the support sheet (5) in an area of its peripheral surface (5c) so as to be peripherally distributed at least in certain sections, and that
- an area of the peripheral surface (3c) of the lenticular sheet (3) is connectable to an area of the peripheral surface (5c) of the support sheet (5) and/or an area of the outer surface (8c) of the fixing part (8) by means of a connection means (9) arranged peripherally distributed at least in certain sections,
- wherein the outer dimensions of the fixing part (8) and of the connection means (9) exceed the surface dimensions of the light-output-side face (3b) of the lenticular sheet (3) by not more than the spacing A of adjacent picture elements (16) on the lenticular sheet (3).

2. Projection screen (2) according to claim 1, **characterized in that** the surface dimensions of the light-output-side face (3b) of the lenticular sheet (3) are less than 2 mm, preferably less than 1 mm, greater than those of the light-input-side face (3a).

3. Projection screen (2) according to any one of the preceding claims, **characterized in that** the peripheral surface (3c) of the lenticular sheet (3) is constructed in such a way that the light of a closest-to-the-edge picture element (16) of the image plane (10) of the projected image, where said image plane (10) is situated in the lenticular sheet (3), can exit unimpeded by the connection means (9) through the edge of the light-output-side face (3b) of the lenticular sheet (3).

4. Projection screen (2) according to any one of the previous claims, **characterized in that** the peripheral surface (3c, 5c) of the lenticular sheet (3) or of the support sheet (5) is constructed step- or terrace-shaped.

5. Projection screen (2) according to any one of the preceding claims, **characterized in that** the Fresnel structure (4d) is formed on a Fresnel sheet (4) which is disposed between the support sheet (5) and the lenticular sheet (3).

6. Projection screen (2) according to claim 5, **characterized in that** the Fresnel structure (4d) is formed on the light-output-side face (4b) of the Fresnel sheet (4).

7. Projection screen (2) according to claim 6, **characterized in that** the light-input-side face (4a) of the Fresnel sheet (4) is connected firmly to the light-output-side face (5b) of the support sheet (5).

8. Projection screen (2) according to claim 6, **characterized in that** the light-input-side face (4a) of the Fresnel sheet (4) rests against the light-output-side face (5b) of the support sheet (5).

9. Projection screen (2) according to claim 6, **characterized in that** the light-input-side face (4a) of the Fresnel sheet (4) is separated by a gap from the light-output-side face (5b) of the support sheet.

10. Projection screen (2) according to claim 9, **characterized in that** the width of the gap is less than 0.5 mm, preferably less than 0.3 mm.

11. Projection screen (2) according to any one of claims 5 to 10, **characterized in that** at least one spacer element ensuring the maintenance of a small surface spacing is disposed between the light-output-side face (5b) of the support sheet (5) and the light-input-side face (4a) of the Fresnel sheet (4).

12. Projection screen (2) according to claim 11, **characterized in that** the spacer element incorporates a plurality of pins.

13. Projection screen (2) according to claim 11, **characterized in that** the spacer element incorporates a fabric- or gauze-type structure.

14. Projection screen (2) according to any one of claims 5 to 13, **characterized in that** the Fresnel sheet (4) is a Fresnel film with a thickness of less than 1.0 mm, preferably less than 0.5 mm, particularly preferably less than 0.3 mm.

15. Projection screen (2) according to any one of the preceding claims, **characterized in that** the lenticular sheet (3) is surface laminated on the light-input- (3a) and the light-output-side (3b) face.

16. Projection screen (2) according to any one of the preceding claims, **characterized in that** the support sheet (5) is surface laminated on the light-input- (5a) and the light-output-side (5b) face.

17. Projection screen (2) according to any one of claims 1 to 16, **characterized in that** it comprises a fixing part (8), wherein the outer dimensions of the fixing part (8) and of the connection means (9) are not greater than the surface dimensions of the light-output-side face (3b) of the lenticular sheet (3).

18. Projection screen (2) according to claim 17, **characterized in that** the fixing part (8) enclosing the peripheral surface (5c) of the support sheet (5) is wedge-shaped.

19. Projection screen (2) according to claim 17 or 18, **characterized in that** an area of the peripheral surface (5c) of the support sheet (5) is connected to the fixing part (8) by means of a securing means (12) disposed peripherally distributed at least in certain sections.

20. Projection screen (2) according to claim 19, **characterized in that** the connection means (9) is also the securing means (12).

21. Projection screen (2) according to any one of claims 1 to 20, **characterized in that** the connection means (9) and/or the securing means (12) is constructed as an adhesive strip.

22. Rear projection module for displaying an image on a large-area projection screen (2), comprising
- a light transmissive picture generator (15) for depicting the image on a reduced scale,
- an illumination unit (20) for the transillumination of the light transmissive picture generator (15),
- a projection screen (2), and
- a projection unit (30) for the magnified imaging onto the projection screen (2) of the image depicted by the light transmissive picture generator (15),
**characterized in that**
the projection screen (2) is constructed according to any one of claims 1 to 21.

23. Rear projection module according to claim 22, **characterized in that**
- a module housing (40) screening the light input face (2a) of the projection screen (2) against ambient light is provided, on the front side (41) of which the projection screen (2) is disposed,
- the projection unit (30) is disposed on the inside (42) of the module housing (40),
- the light transmissive picture generator (15) is disposed in a cutout (44) in a wall area (43) of the module housing (40),
- the illumination unit (20) is disposed outside the module housing (40) in a light source housing (51) which is removable at the cutout (44) of the module housing (40) and can be attached to the module housing (40) in such a way that it projects out of the wall area (43) of the module housing (40).

24. Rear projection module according to claim 23, **characterized in that** the module housing (40) comprises in a corresponding area (45), which is provided for a light source housing (51) secured to an adjacent rear projection module (1), a chamfering (46), opening or cutout which is accessible from its outside and is so constructed that the light source housing (51) of the adjacent rear projection module (1) can be disposed in the corresponding area (45).

25. Rear projection module according to claim 24, **characterized in that** the module housing (40) comprises a rear wall (47), which is arranged opposite the front side (41), and at least two oppositely disposed side walls (48, 49) connecting the front side (41) to the rear wall (47), wherein the rear wall (47) comprises at the transition point (50) to the first side wall (48) the chamfering (46), opening or cutout, and in the second side wall (49) the cutout (44) for the light transmissive picture generator (15) is disposed.

26. Rear projection module according to claim 25, **characterized in that** the chamfering (46), opening or cutout extends in a vertical direction through the rear wall (47) and the first side wall (48).

27. Rear projection module according to any one of claims 23 to 26, **characterized in that** there is disposed in the light source housing (51) a light deflecting mirror (24) and the light source (21) of the illumination unit (20) is accessible from the rear side of the rear projection module (1).

28. Rear projection module according to claim 22, **characterized in that** between the projection unit (30) and the projection screen (2) at least one image deflecting mirror (31) is disposed in the imaging path, wherein at least one image deflecting mirror (31) comprises on its rear side, distributed over its surface, a plurality of adjustment elements (32) adjustable individually in a variable length, with which the mirror surface of the image deflecting mirror (31) is variable slightly in its curvature.

29. Rear projection module according to claim 28, **characterized in that** four adjustment elements (32) are provided.

30. Rear projection module according to claim 29, **characterized in that** the adjustment elements (32) are arranged in the comer points of a rectangle.

31. Rear projection module according to any one of claims 28 to 30, **characterized in that** only one image deflecting mirror (31) is disposed between the light transmissive picture generator (15) and the projection screen (2) and the image deflecting mirror (31) is positioned essentially vertically.

32. Rear projection module according to claim 22, **characterized in that** the projection unit (30) comprises a projecting lens (33) with an intercept length which lies in a range of 10% less to 10% more than the image diagonal of the projection screen (2).

33. Rear projection module according to claim 32, **characterized in that** the projecting lens (33) is a lens of virtually fixed focal length, which is variably adjustable by more than 0.01% but less than 0.5%.

34. Projector for projecting an image on a large-area projection screen, comprising
- a light transmissive picture generator (15) for depicting the image on a reduced scale,
- an illumination unit (20) for the transillumination of the light transmissive picture generator (15), wherein the illumination unit (20) comprises a light source (21), a reflector (22) and a condenser (25) for the illumination of the light transmissive picture generator (15),
- a projection screen (2) and
- a projection unit (30) for the magnified imaging onto the projection screen of the image depicted by the light transmissive picture generator (15),
**characterized in that** the projection screen (2) is constructed according to any one of claims 1 to 21, and that the condenser (25) incorporates a non-rotationally-symmetrical free-form condenser lens (23).

35. Projector according to claim 34, **characterized in that** the free-form condenser lens (23) comprises four quadrants arranged mirror-symmetrically relative to one another.

36. Projector according to claim 34 or 35, **characterized in that** the reflector (22) comprises an elliptically curved surface rotationally symmetrical relative to the optical axis.

37. Projector according to any one of claims 34 to 36, **characterized in that** the free-form condenser lens (23) is so constructed that the light distribution generated by the reflector (22) is converted into a light distribution adapted to the rectangular format of the picture by means of the free-form condenser lens (23).

38. Projector according to any one of claims 34 to 37, **characterized in that** the free-form condenser lens (23) is so constructed that the decrease in the light intensity towards the edge of the image is at least partly compensated for.

39. Projector according to claim 38, **characterized in that** the free-form condenser lens (23) is so constructed that the illumination intensity of the projected image deviates by less than 25%, preferably less than 15%, from a mean value.

40. Projector according to any one of claims 34 to 39, or rear projection module according to claim 22, 23, 28 or 32, **characterized in that** the projection unit (30) incorporates a Fresnel lens (35) disposed on the light output side of the light transmissive picture generator (15).

41. Projector or rear projection module according to claim 40, **characterized in that** the Fresnel structure of the Fresnel lens (35) is disposed on the side facing the light transmissive picture generator (38).

42. Projector or rear projection module according to claim 40, **characterized in that** the condenser (25) incorporates a Fresnel condenser (34).

43. Projector according to any one of claims 34 to 39 or rear projection module according to any one of claims 22, 23, 28 or 32, **characterized in that** the projection unit (30) incorporates a Fresnel lens (35) disposed on the light output side of the light transmissive picture generator (15), the Fresnel structure of the Fresnel lens (35) is disposed on the side facing the light transmissive picture generator (38), the condenser (25) incorporates a Fresnel condenser (34) and the Fresnel structure of the Fresnel condenser (34) is disposed on the side facing the light transmissive picture generator.

## Revendications

1. Ecran (2) de projection de grande surface pour l'affichage d'une image, comportant un module de rétroprojection qui comprend
- un dispositif (15) de fourniture d'image par lumière transmise pour la représentation de l'image à une échelle réduite,
- un dispositif (20) d'éclairage pour faire passer de la lumière dans le dispositif (15) de fourniture d'image par lumière transmise et
- un dispositif (30) de projection pour reproduire de manière agrandie l'image représentée par le dispositif (15) de fourniture d'image par lumière transmise sur l'écran (2) de projection,
- l'écran (2) de projection ayant un disque (3) lenticulaire et un disque (5) de support qui ont chacun une surface (3a, 5a) du côté de la lumière incidente qui est tournée vers le dispositif (30) de projection, une surface (3b, 5b) du côté de sortie de la lumière opposée à celle-ci et une surface (3c, 5c) d'enveloppe reliant la surface d'entrée à la surface de sortie, et une structure (4d) de Fresnel disposée entre sa surface (2a) d'entrée et sa surface (2b) de sortie,
**caractérisé en ce que**
- les dimensions des surfaces du disque (3) lenticulaire et du disque (5) de support sont plus petites, en répartition sur la périphérie, sur la surface du côté entrée de la lumière (3a, 5a) que sur la surface (3b, 5b) du côté sortie de la lumière, les dimensions de la surface (3a) du côté entrée de la lumière du disque (3) lenticulaire et de la surface (5b) du côté sortie de la lumière du disque (5) de support correspondant à celles de la structure (4d) de Fresnel disposées entre elles,
- le disque (5) de support est formé de telle sorte qu'il puisse être maintenu par sa surface (5c) d'enveloppe par un élément (7) de maintien, dont la partie servant de partie (8) de fixation et se trouvant à l'extrémité de l'élément (7) de maintien dans la direction de propagation de la lumière projetée entoure le disque (5) de support sur une zone de sa surface (5c) périphérique au moins par morceaux de manière répartie sur sa périphérie et
- une zone de la surface (3c) périphérique du disque (3) lenticulaire peut être reliée à une zone de la surface (5c) périphérique du disque (5) de support et/ou à une zone de la surface extérieure (8c) de la partie (8) de fixation par un moyen (9) de liaison disposé de manière répartie sur la périphérie au moins par morceaux,
- les dimensions extérieures de la partie (8) de fixation et du moyen (9) de liaison ne dépassant pas les dimensions de la surface (3b) du côté de sortie de la lumière du disque (3) lenticulaire de plus de l'écart A entre des points (16) d'image voisins sur le disque (3) lenticulaire.

2. Ecran (2) de projection suivant la revendication 1, **caractérisé en ce que** les dimensions de la surface (3b) du côté de sortie de la lumière du disque (3) lenticulaire sont plus grandes de moins de 2 mm, de préférence de moins de 1 mm, que celles de la surface (3a) du côté d'entrée de la lumière.

3. Ecran (2) de projection suivant l'une des revendications précédentes, **caractérisé en ce que** la surface (3c) périphérique du disque (3) lenticulaire est formée de telle sorte que la lumière d'un point (16) d'image proche du bord du plan (10) d'image se trouvant dans le disque (3) lenticulaire de l'image projetée puisse sortir sans obstacle du moyen (9) de liaison par le bord de la surface (3b) du côté de sortie de la lumière du disque (3) lenticulaire.

4. Ecran (2) de projection suivant l'une des revendications précédentes, **caractérisé en ce que** la surface (3c, 5c) périphérique du disque (3) lenticulaire ou du disque (5) de support est étagée ou en marches d'escalier.

5. Ecran (2) de projection suivant l'une des revendications précédentes, **caractérisé en ce que** la structure (4d) de Fresnel est formée sur un disque (4) de Fresnel, qui est disposé entre le disque (5) de support et le disque (3) lenticulaire.

6. Ecran (2) de projection suivant la revendication 5, **caractérisé en ce que** la structure (4d) de Fresnel est formée sur la surface (4b) de sortie de la lumière du disque (4) de Fresnel.

7. Ecran (2) de projection suivant la revendication 6, **caractérisé en ce que** la surface (4a) du côté d'entrée de la lumière du disque (4) de Fresnel est reliée de manière fixe à la surface (5b) du côté de sortie de la lumière du disque (5) de support.

8. Ecran (2) de projection suivant la revendication 6, **caractérisé en ce que** la surface (4a) du côté d'entrée de la lumière du disque (4) de Fresnel est appliquée à la surface (5b) du côté de sortie de la lumière du disque (5) de support.

9. Ecran (2) de projection suivant la revendication 6, **caractérisé en ce que** la surface (4a) du côté d'entrée de la lumière du disque (4) de Fresnel est maintenue à distance de la surface (5b) du côté de sortie de la lumière du disque de support par un intervalle.

10. Ecran (2) de projection suivant la revendication 9, **caractérisé en ce que** la largeur de l'intervalle est inférieure à 0,5 mm, de préférence inférieure à 0,3 mm.

11. Ecran (2) de projection suivant l'une des revendications 5 à 10, **caractérisé en ce qu**'au moins un élément d'entretoisement assurant le respect d'un petit écart entre les surfaces est disposé entre la surface (5b) du côté de sortie de la lumière du disque (5) de support et la surface (4a) du côté d'entrée de la lumière du disque (4) de Fresnel.

12. Ecran (2) de projection suivant la revendication 11, **caractérisé en ce que** l'élément d'entretoisement comprend une pluralité de broches.

13. Ecran (2) de projection suivant la revendication 11, **caractérisé en ce que** l'élément d'entretoisement a une structure de tissu ou de gaze.

14. Ecran (2) de projection suivant l'une des revendications 5 à 13, **caractérisé en ce que** le disque (4) de Fresnel est une feuille de Fresnel ayant une épaisseur de moins de 1,0 mm, de préférence de moins de 0,5 mm et plus particulièrement de moins de 0,3 mm.

15. Ecran (2) de projection suivant l'une des revendications précédentes, **caractérisé en ce que** le disque (3) lenticulaire est contrecollé en surface sur la surface d'entrée (3a) de la lumière et la surface de sortie (3b) de la lumière.

16. Ecran (2) de projection suivant l'une des revendications précédentes, **caractérisé en ce que** le disque (5) de support est contrecollé en surface sur la surface du côté (5a) d'entrée de la lumière et sur la surface du côté (5b) de sortie de la lumière.

17. Ecran (2) de projection suivant l'une des revendications 1 à 16, **caractérisé en ce qu**'il comporte une pièce (8) de fixation, les dimensions extérieures de la pièce (8) de fixation et du moyen (9) de liaison n'étant pas plus grandes que les dimensions de la surface (3b) du côté de sortie de la lumière du disque (3) lenticulaire.

18. Ecran (2) de projection suivant la revendication 17, **caractérisé en ce que** la pièce (8) de fixation entourant la surface (5c) périphérique du disque (5) de support est cunéiforme.

19. Ecran (2) de projection suivant la revendication 17 ou 18, **caractérisé en ce qu**'une zone de la surface (5c) périphérique du disque (5) de support est reliée à la pièce (8) de fixation par un moyen (12) de fixation disposé, au moins par morceaux en étant réparti sur la périphérie.

20. Ecran (2) de projection suivant la revendication 19, **caractérisé en ce que** le moyen (9) de liaison est également un moyen (12) de fixation.

21. Ecran (2) de projection suivant l'une des revendications 1 à 20, **caractérisé en ce que** le moyen (9) de liaison et/ou le moyen (12) de fixation sont sous forme de ruban adhésif.

22. Module de rétroprojection pour l'affichage d'une image sur un écran (2) de projection de grande surface, comprenant
- un dispositif (15) de fourniture d'image par lumière transmise pour la représentation de l'image à une échelle réduite,
- un dispositif (20) d'éclairement du dispositif (15) de fourniture d'image par lumière transmise,
- un écran (2) de projection et
- un dispositif (30) de projection pour reproduire de manière agrandie l'image représentée par le dispositif (15) de fourniture d'image par lumière transmise sur l'écran (2) de projection,
**caractérisé en ce que**
l'écran (2) de projection est formé suivant l'une des revendications 1 à 21.

23. Module de rétroprojection suivant la revendication 22, **caractérisé en ce que**
- il est prévu un boîtier (40) de module qui protège de la lumière extérieure la surface (2a) d'entrée de la lumière de l'écran (2) de projection et à la surface frontale (41) duquel l'écran (2) de projection est monté,
- le dispositif (30) de projection est disposé à l'intérieur (42) du boîtier (40) de module,
- le dispositif (15) de fourniture d'image par lumière transmise est disposé dans un évidement (44) de la surface (43) de la paroi du boîtier (40) de module,
- le dispositif (20) d'éclairement est disposé à l'extérieur du boîtier (40) de module dans un boîtier (51) de source de lumière, qui peut être posé, de manière à pouvoir en être retiré, sur l'évidement (44) du boîtier (40) de module, de sorte à dépasser de la surface (43) de la paroi du boîtier (40) de module.

24. Module de rétroprojection suivant la revendication 23, **caractérisé en ce que** le boîtier (40) de module comporte, dans une zone (45) correspondante, qui est prévue pour un boîtier (51) de source de lumière posé sur un module (1) de rétroprojection voisin, un chanfrein (46), une ouverture ou un évidement accessibles de son côté extérieur, qui sont tels que le boîtier (51) de source de lumière du module (1) de rétroprojection voisin puisse être disposé dans la zone (45) correspondante.

25. Module de rétroprojection suivant la revendication 24, **caractérisé en ce que** le boîtier (40) de module a une paroi arrière (47), opposée à la paroi (41) frontale et au moins deux parois (48, 49) latérales opposées reliant de la face frontale (41) à la paroi arrière (47), la paroi arrière (47) comportant, au passage (50) vers la première paroi latérale (48) le chanfrein (46), l'ouverture ou l'évidement et l'évidement (44) pour le dispositif (15) de fourniture d'image par lumière transmise est disposé dans la seconde paroi (49) latérale.

26. Module de rétroprojection suivant la revendication 25, **caractérisé en ce que** le chanfrein (46), l'ouverture ou l'évidement s'étend perpendiculairement au-dessus de la paroi (47) arrière et de la première paroi latérale (48).

27. Module de rétroprojection suivant l'une des revendications 23 à 26, **caractérisé en ce qu**'un miroir (24) de déviation d'éclairement est disposé dans le boîtier (51) de source de lumière et la source (21) de lumière du dispositif (20) d'éclairement est accessible par la face arrière du module (1) de rétroprojection.

28. Module de rétroprojection suivant la revendication 22, **caractérisé en ce qu**'au moins un miroir (31) de déviation d'image est disposé entre le dispositif (30) de projection et l'écran (2) de projection dans le chemin de la reproduction, au moins un miroir (31) de déviation de reproduction comporte sur sa face arrière plusieurs éléments (32) de réglage répartis sur la surface, qui peuvent être réglés individuellement par modification de la longueur et par lesquels la courbure de la surface du miroir (31) de déviation de reproduction peut être légèrement modifiée en courbure.

29. Module de rétroprojection suivant la revendication 28, **caractérisé en ce qu**'il est prévu quatre éléments (32) de réglage.

30. Module de rétroprojection suivant la revendication 29, **caractérisé en ce que** les éléments (32) de réglage sont disposés aux sommets d'un rectangle.

31. Module de rétroprojection suivant l'une des revendications 28 à 30, **caractérisé en ce qu**'il n'est prévu qu'un miroir (31) de déviation de représentation entre le dispositif (15) de fourniture d'image par lumière transmise et l'écran (2) de projection et le miroir (31) de déviation de reproduction est orienté sensiblement verticalement.

32. Module de rétroprojection suivant la revendication 22, **caractérisé en ce que** le dispositif (30) de projection comporte un objectif (33) de projection ayant une distance focale se trouvant dans une plage comprise entre une valeur 10 % plus petite que la diagonale de l'écran (2) de projection et une valeur 10 % plus grande que cette diagonale.

33. Module de rétroprojection suivant la revendication 32, **caractérisé en ce que** l'objectif (33) de projection est un objectif ayant une distance focale pratiquement fixe, qui peut être réglée en étant modifiée de plus de 0,01 % mais de moins de 0,5 %.

34. Appareil de projection d'une image sur un écran de projection de grande surface, comprenant
- un dispositif (15) de fourniture d'image par lumière transmise pour la représentation de l'image à une échelle réduite,
- un dispositif (20) d'éclairage du dispositif (15) de fourniture d'image par lumière transmise, le dispositif (20) d'éclairage comportant une source (21) de lumière, un réflecteur (22) et un condenseur (25) pour éclairer le dispositif (15) de fourniture d'image par lumière transmise,
- un écran (2) de projection et
- un dispositif (30) de projection pour la reproduction agrandie de l'image représentée par le dispositif (15) de fourniture d'image par lumière transmise sur l'écran de projection,
**caractérisé en ce que** l'écran (2) de projection est formé suivant l'une des revendications 1 à 21 et le condenseur (25) comprend une lentille (23) de condenseur de forme libre qui n'est pas de symétrie de révolution.

35. Appareil de projection suivant la revendication 34, **caractérisé en ce que** la lentille (23) de condenseur de forme libre a quatre cadrans disposés de manière symétrique comme en un miroir les uns par rapport aux autres.

36. Appareil de projection suivant la revendication 34 ou 35, **caractérisé en ce que** le réflecteur (22) a une surface de symétrie de révolution par rapport à son axe optique et cintrée en ellipse.

37. Appareil de projection suivant l'une des revendications 34 ou 36, **caractérisé en ce que** la lentille (23) de condenseur de forme libre est formée de telle sorte que la répartition de la lumière produite par le réflecteur (22) peut être transformée en une répartition de lumière adaptée au format rectangulaire de l'image au moyen de la lentille (23) de condenseur de forme libre.

38. Appareil de projection suivant l'une des revendications 34 à 37, **caractérisé en ce que** la lentille (23) de condenseur de forme libre est formée de telle sorte que la baisse de l'intensité lumineuse au bord de l'image soit compensée au moins en partie.

39. Appareil de projection suivant la revendication 38, **caractérisé en ce que** la lentille (23) de condenseur de forme libre est formée de telle sorte que l'intensité de l'éclairage de la lumière projetée s'écarte de moins de 25 % de préférence de moins de 15 % d'une valeur moyenne.

40. Appareil de projection suivant l'une des revendications 34 à 39, ou module de rétroprojection suivant la revendication 22, 23, 28 ou 32, **caractérisé en ce que** le dispositif (30) de projection comprend une lentille (35) de Fresnel disposée du côté de sortie de la lumière du dispositif (15) de fourniture d'image par lumière transmise.

41. Appareil de projection ou module de rétroprojection suivant la revendication 40, **caractérisé en ce que** la structure de Fresnel de la lentille (35) de Fresnel est prévue du côté tourné vers le dispositif (38) de fourniture d'image par lumière transmise.

42. Appareil de projection ou module de rétroprojection suivant la revendication 40, **caractérisé en ce que** le condenseur (25) comprend un condenseur (34) de Fresnel.

43. Appareil de projection suivant l'une des revendications 34 à 39 ou module de rétroprojection suivant l'une des revendications 22, 23, 28 ou 32 **caractérisé en ce que** le dispositif (30) de projection comprend une lentille (35) de Fresnel disposée du côté de sortie de la lumière du dispositif (15) de fourniture d'image par lumière transmise, la structure de Fresnel de la lentille (35) de Fresnel est disposée du côté tourné vers le dispositif (38) de fourniture d'image par lumière transmise, le condenseur (25) comprend un condenseur (34) de Fresnel et la structure de Fresnel du condenseur (34) de Fresnel est disposée du côté tourné vers le dispositif de fourniture d'image par lumière transmise.
